# EUROPEAN PATENT SPECIFICATION

(11) **EP 1 657 463 B1**
(45) Date of publication and mention of the grant of the patent: **26.11.2008**
(21) Application number: 05024630.5
(22) Date of filing: 11.11.2005
(51) Int. Cl.: F16D 13/75

(54) **Clutch adjustment apparatus**
Kupplungsnachstellvorrichtung
Dispositif de rattrapage de jeu pour embrayage

(30) Priority: 12.11.2004 JP 2004329666; 16.11.2004 JP 2004331733
(43) Date of publication of application: 17.05.2006
(73) Proprietor: AISIN SEIKI KABUSHIKI KAISHA, Kariya-shi, Aichi-ken 448-8650 (JP)
(72) Inventor: Maki, Naoyuki, Kariya Aichi 448-8605 (JP); Takashi, Yukihisa, Kariya-shi Aichi-ken 448-8650 (JP); Ohkubo, Isao, Kariya Aichi 448-8605 (JP)
(74) Representative: Kramer - Barske - Schmidtchen

(56) References cited:
- EP-A- 1 245 850
- US-A- 5 409 091
- US-A1- 2004 035 669

## Description

### FIELD OF THE INVENTION

This invention generally relates to a clutch control apparatus for use in a vehicle, a clutch control apparatus which enables torque transmission between a driving power source (e.g., an internal combustion engine) and a transmission. Especially, this invention pertains to a clutch control apparatus which is capable of compensating for variations in characteristics of a clutch load, variations which are generated in response to the extent of abrasion of clutch facings.

### BACKGROUND

Generally speaking, in a known clutch control apparatus provided with a clutch for a torque transmitting between a driving power source (e.g., an internal combustion engine) and a transmission for use in a vehicle, a posture of a diaphragm spring varies corresponding to the extent of abrasion of clutch facings (a clutch disc). Therefore, once the clutch facings are abraded, an operational force required for establishing a disengagement condition of the clutch, i.e., a load applied to a clutch cover is increased. In the light of the foregoing, as is disclosed in JP05(1993)-215150A for example, a height of a fulcrum of a diaphragm spring is changed corresponding to a load applied to a clutch cover upon a clutch operation, i.e., corresponding to a load applied to a diaphragm spring supported by the clutch cover upon a clutch operation. Therefore, a posture of the diaphragm spring can be modified, thereby compensating for variations in characteristics of a clutch load, variations which are generated in response to the extent of abrasion of clutch facings. As one of a mechanism for adjusting or compensating for variations in characteristics of a clutch load, an adjusting mechanism has been known. A further prior art clutch control apparatus is known from EP-A-1 245 850.

However, in the above-described conventional clutch control apparatus, the height of the fulcrum of the diaphragm spring is corrected in response to a balance in terms of a degree of load applied to the clutch cover. In this case, there is a large possibility that the height of the fulcrum, of the diaphragm spring may not be corrected equally and may be widely fluctuated. Further, there is a possibility that resonance of the clutch cover may occur due to engine vibration and the degree of load applied to the clutch cover may become imbalanced. In this case, the height of the fulcrum of the diaphragm spring may be corrected in error.

The present invention has been made in view of the above circumstances, and provide a clutch control apparatus capable of compensating for abrasion of clutch facings with a high degree of compensating precision.

### SUMMARY OF THE INVENTION

According to an aspect of the present invention, a clutch control apparatus includes: a clutch assembly including a flywheel integrally rotatable with an output shaft of a driving power source; a pressure plate; a clutch disc frictionally engageable between a pressure plate and the flywheel so as to transmit a driving power of the driving power source to a transmission; a diaphragm spring configured to change the frictional engagement of the clutch disc when a posture of the diaphragm spring varies; and a clutch cover; an adjusting mechanism intervening between the pressure plate and the diaphragm spring, the adjusting mechanism configured to establish a transmitting path of an operation force between the pressure plate and the diaphragm spring and to alter an axial directional spacing between the diaphragm spring and the pressure plate. The adjusting mechanism includes: a taper portion associated with the pressure plate and having a taper surface facing the diaphragm spring; a lower rack fixed at the taper portion and having lower rack teeth facing the diaphragm spring side; an adjustment wedge member relatively rotationally interposed between the taper portion and the diaphragm spring and having an wedge-side taper surface operatively contacted with the taper surface; an adjustment pinion attached to the adjustment wedge member and having pinion teeth facing the pressure plate side; an upper rack interposed between the adjustment pinion and the lower rack so as to rotate relative to the adjustment pinion and the adjustment wedge member, the upper rack having first rack teeth engageable with the pinion teeth and second rack teeth engageable with the lower rack teeth; and a biasing member for biasing the upper rack in a direction for releasing an engagement between the upper rack and the lower rack as well as generating sliding contact between the lower rack teeth and the second rack teeth of the upper rack. The adjusting mechanism is characterized in further including an engagement-releasing member freely rotatably attached to the adjustment wedge member. The engagement-releasing member has a stopping portion that restrains an axial directional approach of the pressure plate to the clutch cover in response to a contact of the stopping portion with the clutch cover, a holding portion that holds a radially peripheral end portion of the diaphragm spring, and a pushing portion operatively pushing the pressure plate in response to rotation of the engagement-releasing member. The engagement-releasing member is configured so that, when the pushing portion pushes the pressure plate in response to the contact of the stopping portion with the clutch cover and in response to an axial movement of the holding portion holding the radially peripheral end portion of the diaphragm spring, the adjustment wedge member can be moved away from the pressure plate, and the engagement between the adjustment pinion and the upper rack can be released.

The clutch control further can include: an actuator axially moving the clutch disc facing the flywheel via the diaphragm spring and the pressure plate; an operation fulcrum formed at the clutch cover fixed to the flywheel, the operation fulcrum being associated with the diaphragm spring, of which posture varies in response to changes in an engagement condition of the clutch disc; and a controller controlling operation of the actuator. When a predetermined condition is not satisfied, the controller can control the operation of the actuator so as to apply an operation force to the diaphragm spring within a range at which the axial directional movement of the pressure plate is not restrained by the stopping portion and so as to axially move the pressure plate at a condition in which an engagement between the pinion teeth and the first rack teeth has been established and an engagement between the second rack teeth and the lower rack teeth has been established. On the other hand, when the predetermined condition is satisfied, the controller can control, even after contact of the stopping portion with the clutch cover, the operation of the actuator so as to axially move the holding portion holding the radially outward peripheral surface of the diaphragm spring and so as to push the pressure plate by the pushing portion, so that the adjustment wedge member is moved relative to the pressure plate not less than an axial directional shifting amount which is needed for releasing the engagement between the pinion teeth and the first rack teeth, and a tooth surface of the first rack teeth to be engaged with the pinion teeth is shifted, after which the clutch disc is returned to an engagement condition by the actuator.

Therefore, according to the clutch control apparatus, it is possible to compensate for abrasion of clutch facings with a high precision. That is, only when the predetermined condition is satisfied, the adjusting mechanism can change an axial spacing between the diaphragm spring and the pressure plate. Therefore, by employing, as the predetermined condition, a driving condition in which a possibility of resonance of the clutch is low, as a non-limiting example, it is possible to compensate for abrasion of the clutch with a high precision.

### BRIEF DESCRIPTION OF THE DRAWING

The foregoing and additional features and characteristics of the present invention will become more apparent from the following detailed description considered with reference to the accompanying drawings, wherein:

Fig. 1 is a block view schematically illustrating a clutch control apparatus according to first and second embodiments of the present invention;

Fig. 2 is a sectional view schematically illustrating a structure of a friction clutch incorporated in the clutch control apparatus illustrated in Fig. 1;

Fig. 3 is a cutting aerial view schematically illustrating a structure of the friction clutch according to the first and second embodiments;

Fig. 4 is a side view schematically illustrating an adjusting mechanism as viewed from an outer peripheral side, an adjusting mechanism which is incorporated in the clutch control apparatus according to the first embodiment;

Fig. 5 is an enlarged partially sectional view illustrating a structure of the adjusting mechanism taken along line V-V in Fig. 4;

Fig. 6 is an enlarged partially sectional view illustrating a structure of the adjusting mechanism taken along line VI-VI in Fig. 4;

Figs. 7A, 7B, 7C and 7D are first side views for explaining the structure, and the operation, of the adjusting mechanism as viewed from the inner peripheral side according to the first embodiment;

Figs. 8A, 8B and 8C are second side views for explaining the structure, and the operation, of the adjusting mechanism as viewed from the outer peripheral side according to the first embodiment;

Figs. 9A, 9B and 9C are a front view, a back view, and an aerial view, schematically illustrating a structure of an engagement-releasing member incorporated in the clutch control apparatus according to the first embodiment;

Fig. 10 is a side view schematically illustrating an adjusting mechanism as viewed from an inner peripheral side, an adjusting mechanism which is incorporated in the clutch control apparatus according to the second embodiment;

Fig. 11 is an aerial view illustrating a structure of the adjusting mechanism according to the second embodiment;

Fig. 12 is an enlarged partially sectional view illustrating a structure of the adjusting mechanism taken along line A-A';

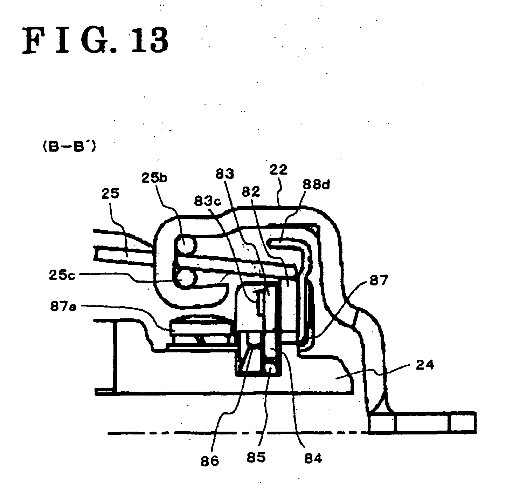

Fig. 13 is an enlarged partially sectional view illustrating a structure of the adjusting mechanism taken along line B-B';

Fig. 14A (including sub-figures 14A-1, 14A-2, 14A-3) is a first side view for explaining the structure, and the operation, of an adjusting mechanism as viewed from the inner peripheral side according to the second embodiment;

Fig. 14B (including sub-figures 14B-1, 14B-2, 14B-3) is another first side view for explaining the structure, and the operation, of the adjusting mechanism as viewed from the outer peripheral side according to the second embodiment;

Fig. 15A (including sub-figures 15A-1, 15A-2, 15A-3) is a second side view for explaining the structure, and the operation, of the adjusting mechanism as viewed from the inner peripheral side according to the second embodiment;

Fig. 15B (including sub-figures 15B-1, 15B-2, 15B-3) is another second side view for explaining the structure, and the operation, of the adjusting mechanism as viewed from the outer peripheral side according to the second embodiment;

Fig. 16A is an aerial view schematically illustrating a structure of a biasing member of the adjusting mechanism according to the second embodiment;

Fig. 16B is a side view schematically illustrating a structure of the biasing member of the adjusting mechanism as viewed from the inner peripheral side according to the second embodiment;

Fig. 17 is a side view for explaining an operation of the biasing member according to the second embodiment of the present invention;

Fig. 18 is a side view for explaining detailed structures, of an adjustment pinion, an upper rack, and a lower rack, these three which all are incorporated in the adjusting mechanism according to the second embodiment of the present invention;

Fig. 19 is a flowchart for explaining a program implemented by a CPU of the clutch control apparatus according to the first and second embodiments;

Fig. 20 is another flowchart for explaining a program implemented by the CPU of the clutch control apparatus according to the first and second embodiments; and

Figs. 21A, 21B, and 21C are diagrams for explaining manners and methods of detecting an amount of abrasion of the clutch disc incorporated in the clutch control apparatus according to the first and second embodiments of the present invention.

### DETAILED DISCRIPTION

Embodiments of the present invention will be described hereinbelow in detail with reference to the accompanying drawings.

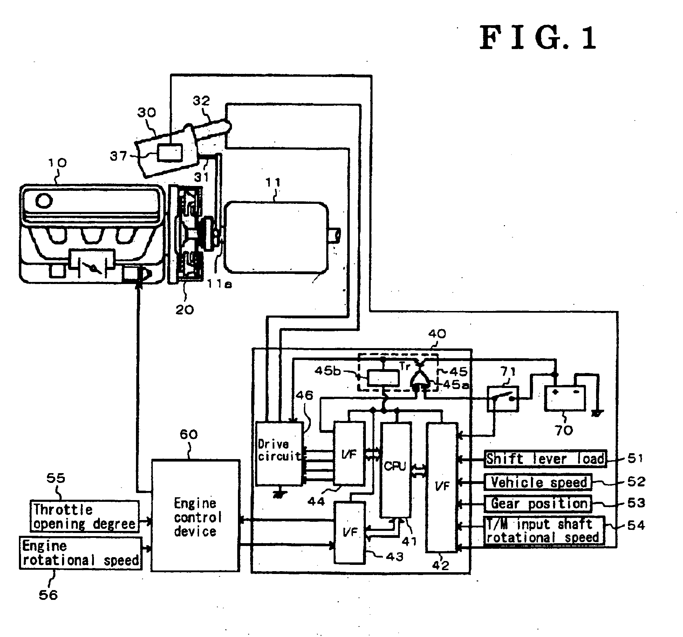

A clutch control apparatus (Fig. 1) according to a first embodiment of the present invention is employed for controlling engagement and disengagement of a friction clutch 20. The clutch control apparatus is provided with the friction clutch 20, an actuator 30, a clutch control circuit 40 and an engine control device 60, as is illustrated, in Fig. 1.

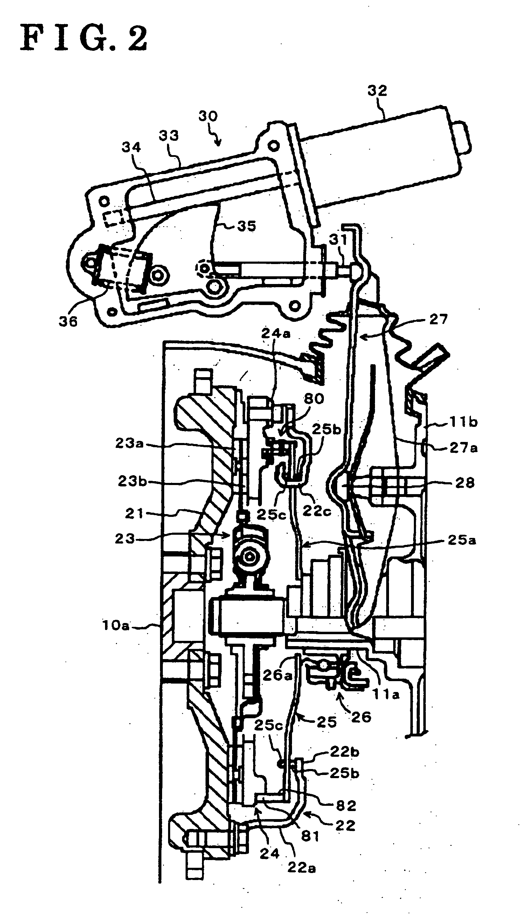

The friction clutch 20, which is disposed between an engine 10 (i.e., a driving power source) and a transmission 11, is a clutch assembly having a mechanism capable of arbitrarily establishing, and interrupting, a transmission path of a rotational force of the engine 10 to the transmission 11. As is illustrated in Fig. 2, the friction clutch 20 is configured with main components such as a flywheel 21, a clutch cover 22, a clutch disc 23, a pressure plate 24, a diaphragm spring 25, a release bearing 26, a release fork 27, a pivot supporting member 28, and an adjusting mechanism 80, as illustrated in Fig. 2.

The flywheel 21 is in a circular disc shaped structure and is fixedly bolted to a crankshaft 10a (i.e., an output shaft of the driving power source) of the engine 10, and can rotate integrally with the crankshaft 10a.

As is illustrated in Figs. 2, 3, 5, and 6, the clutch cover 22 is in an approximately cylindrical structure and faces the flywheel 21 along its axial direction. The clutch cover 22 is provided with a cylindrical hollow portion 22a, a flange portion 22b and fulcrum forming portions 22c (i.e., operation fulcrums). The flange portion 22b is formed at an inner peripheral side of the cylindrical hollow portion 22a, and the fulcrum forming portions 22c are formed, with equally spacing therebetween in a circumferential direction, at an inner peripheral edge of the cylindrical hollow portion 22a. The clutch cover 22 is fixedly bolted to the flywheel 21 at an outer peripheral portion of the cylindrical hollow portion 22a and can rotate integrally with the flywheel 21.

The clutch disc 23 is a friction plate for transmitting a driving power of the engine 10 (illustrated in Fig. 1) to the transmission 11 (illustrated in Fig. 1), and is disposed between the flywheel 21 and the pressure plate 24. The clutch disc 23 is spline-engaged, at its approximately centrally formed and inner peripheral portion, with an input shaft of the transmission 11, such that the clutch disc 23 is capable of moving in its axial direction. Clutch facings 23a and 23b, which are made of friction material, are fastened, with rivets, to radially outward peripheral portions of both surfaces of the clutch disc 23

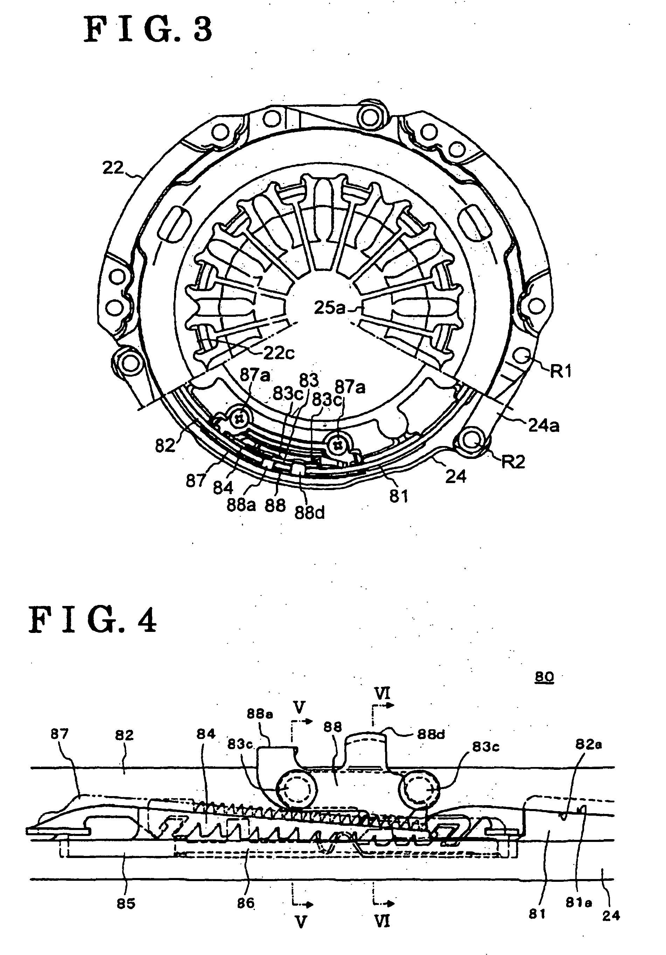

The pressure plate 24 is a plate-shaped member, which applies a pushing force thereof to the clutch disc 23 in a direction of the flywheel 21 and interposes the clutch disc 23 between the pressure plate 24 and the flywheel 21, wherein the clutch disc 23 is frictionally engaged with the flywheel 21 and rotates integrally therewith. The pressure plate 24 is connected to the clutch cover 22 via a strap 24a so as to rotate in response to rotation of the clutch cover 22. The strap 24a is formed by plural thin accumulated leaf springs. As is illustrated in Fig. 3, one end of the strap 24a is secured to an outer peripheral portion of the clutch cover 22 by means of a rivet R1, and the other end thereof is secured to a projection formed at an outer peripheral portion of the pressure plate 24 by means of a rivet R2 (see Fig. 3). Therefore, the strap 24a applies an axial directional biasing force to the pressure plate 24 so that the pressure plate 24 is moved away from the flywheel 21.

The pressure plate 24 is mounted, thereon, with an adjusting mechanism 80, which is capable of altering an axial directional spacing between the diaphragm spring 25 and the pressure plate 24, as is illustrated in Fig. 2. This adjusting mechanism 80 can establish a transmitting path of a force between the pressure plate 24 and the diaphragm spring 25 and is also a mechanism. According to the first embodiment of the present invention, as is illustrated in Fig. 4, the adjusting mechanism 80 includes a taper portion 81, an adjustment wedge member 82, an adjustment pinion 83, an upper rack 84, a lower rack 85, a biasing member 86, a fixing plate member 87, and an engagement-releasing member 88.

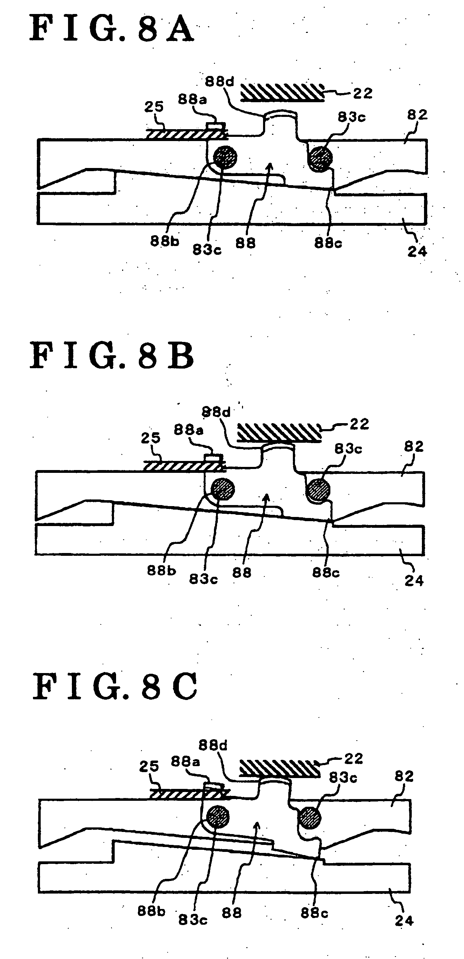

The taper portion 81 in a ring shaped structure is integrally provided at the outer peripheral portion of the pressure pate 24 facing the diaphragm spring 25, as is illustrated in Figs. 4 and 8. The taper portion 81 includes plural saw-toothed taper surfaces 81a which outstands relative to an edge surface of the diaphragm spring 25.

The adjustment wedge member 82, which is disposed between the taper portion 81and a radially outer peripheral portion of the diaphragm spring 25, is in a ring shaped structure having the same diameter as the one of the taper portion 81, and is formed with plural wedge-side taper surfaces 82a corresponding to the taper surfaces 81a. As is illustrated in Fig. 4, the wedge side taper surfaces 82a are in contact with the taper surfaces 81a. A surface of the adjustment wedge member 82, which faces the diaphragm spring 25, can be, for example flatly shaped.

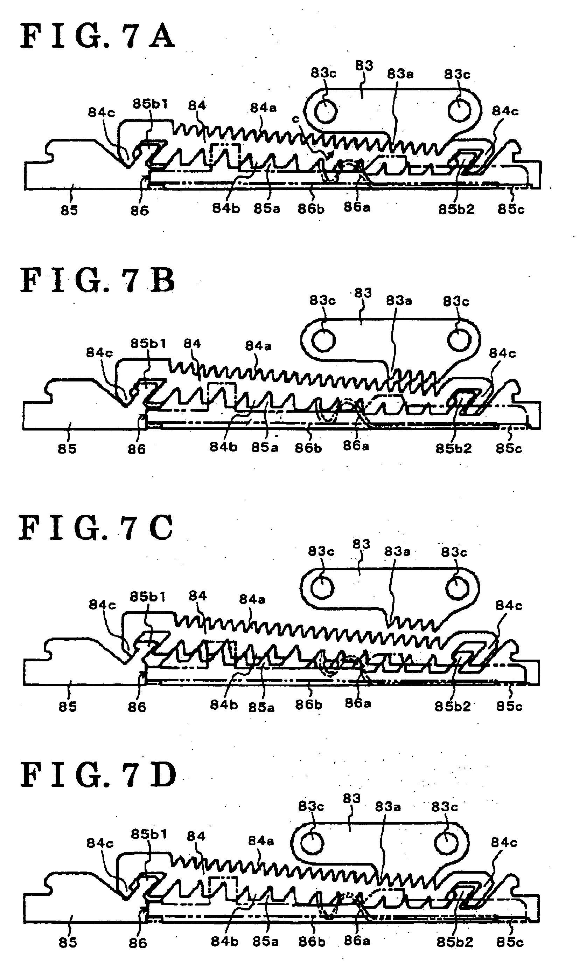

The adjustment pinion 83 is secured to an inner peripheral surface of the adjustment wedge member 82 by means of rivets 83c, as is illustrated in Figs. 3-8. The adjustment pinion 83 is formed with pinion teeth 83a (Fig. 7) which outstands along the axial direction from the diaphragm spring 25 to the pressure plate 24. The pinion teeth 83a can be in a saw-toothed structure or can be shaped of triangle with equal spacing therebetween, as non-limiting

### examples.

The upper rack 84 is positioned between the adjustment pinion 83 and the lower rack 85, as is illustrated in Figs. 4-7. The upper rack 84 is axially and laterally rotatable relative to the adjustment pinion 83 and the lower rack 85. The upper rack 84 includes first rack teeth 84a, second rack teeth 84b and restraining portions 84c (Fig. 7). The first rack teeth 84a extend, towards the diaphragm spring 25, from one side of the upper rack 84 facing the diaphragm spring 25. Each first rack tooth 84a is aligned so as to correspond to an inclining angle of the taper surfaces 81a of the taper portion 81, and is engageable with each pinion tooth 83a. The second rack teeth 84b extend from the other side of the upper rack 84 facing the pressure plate 24 towards the pressure plate 24, and are engageable with the lower rack teeth 85a. When the upper rack 84 is axially pushed to, or retracted from, the side of the first rack teeth 84a, the second rack teeth 84b are laterally slidable along top faces of the lower rack teeth 85a. The restraining portions 84c are formed at both longitudinal directional ends of the upper rack 84, and can be hooked with projections 85b (a first projection 85b1, and a second projection 85b2) of the lower rack 85. By the engagement of the restraining portions 84c of the upper rack 84 with the projections 85b of the lower rack 85, it is possible to restrain axial and peripheral (lateral) movement amounts of the upper rack 84 relative to the lower rack 85 before fully releasing the engagement between the lower rack teeth 85a and the second rack teeth 84b. The peripheral (lateral) movement amount of the upper rack 84 relative to the lower rack 85 is preset to fall in a range between half a pitch, and a full pitch, in terms of a reference pitch circle of each first rack tooth 84a.

The lower rack 85 is mounted at a predetermined portion on the pressure plate 24 and at the inner peripheral side of the adjustment wedge member 82, as illustrated in Figs. 4-7. The lower rack 85 is formed with the lower rack teeth 85a axially extending from the pressure plate 24 towards the diaphragm spring 25. The lower rack 85 is further formed with the projections 85b which are positioned at both ends of the lower rack teeth 85a and projects in the same direction as the outstanding direction of the lower rack teeth 85a. The lower rack 85 is secured, by means of screws 87a, to the pressure plate 24 via the fixing plate member 87 positioned bridging the both end portions of the lower rack 85.

With reference to Figs. 4 and 7, the biasing member 86 is a member for biasing the upper rack 84 in a direction for releasing the engagement between the upper rack 84and the lower rack 85. One end of the biasing member 86 is fixed to a vicinity of the projection 85b1 of the lower rack 85. The biasing member 86 extends to the projection 85b2 along the outer periphery of the lower rack 85 while the one end thereof is being fixed, and further extends to the inner peripheral side of the lower rack 85 via a notch 85c. The biasing member 86 includes a spring 86a, which extends, at the inner peripheral side of the lower rack 85, from the projection 85b2 of the lower rack 85 to the projection 85b1 thereof, and biases the upper rack 84 in a direction (in a direction C in Fig. 7A) for slidably releasing the engagement between the lower rack teeth 85a and the second rack teeth 84b. A portion of the biasing member 86, which extends from the one end of the biasing member 86 to the notch 85c, is employed as a receiving portion 86b. The receiving portion 86b is subjected to a biasing force of the spring 86a for biasing the upper rack 84. The biasing member 86 biases the upper rack 84 in a direction for releasing the engagement between the upper rack 84 and the lower rack 85 as a slidable movement between the tooth surfaces of the lower rack teeth 85a and the tooth surfaces of the second rack teeth 84b.

The fixing plate member 87 is formed to be longitudinally longer than the lower rack 85 in a circumferential direction and is attached to the pressure plate 24 by means of screws 87a along the outer periphery of the taper portion 81, as illustrated in Fig. 3.

The engagement-releasing member 88 is capable of releasing, by operation of the diaphragm spring 25, the engagement between (the pinion teeth 83a of) the adjustment pinion 83 and (the first rack teeth 84a of) the upper rack 84, as illustrated in Figs. 4-9. The engagement-releasing member 88 is freely rotatably attached to the outer peripheral portion of the adjustment wedge member 82 to be opposed to the adjustment pinion 83. The engagement-releasing member 88 includes a holding portion 88a, an axial bore 88b, a pushing portion 88c, and a stopping portion 88d.

The holding portion 88a holds a radially outward peripheral end portion of the diaphragm spring 25 for the purpose of altering an axial spacing between the diaphragm spring 25 and the pressure plate 24. The holding portion 88a extends towards the diaphragm spring 25 from the engagement-releasing member 88. A spacing between the holding portion 88a and the diaphragm spring 25 is less than the one between an edge surface of the adjustment wedge member 82 facing the diaphragm spring 25 and the diaphragm spring 25. The extending portion of the holding portion 88a is bent from the outer peripheral side of the adjustment wedge member 82 to the inner peripheral side thereof. A portion of the holding portion 88a, which is at the side of a tip end as viewed from the bent portion, can come in contact with the radially outward peripheral end portion of the diaphragm spring 25. As described above, by virtue of the holding portion 88a, the operation of the engagement-releasing member 88 can correspond to an axial operation of the radially outward peripheral end portion of the diaphragm spring 25.

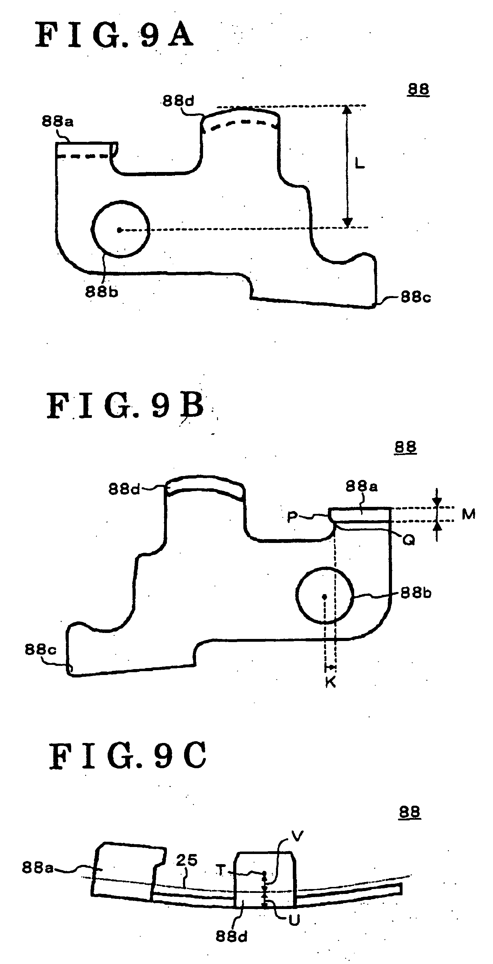

As is illustrated in Fig. 9B, an end portion P of the holding portion 88a at the side of the stopping portion 88d is formed to be a curved surface by means of a press-working or a barrel polishing. A curvature radius of the end portion P of the holding portion 88a is designed to fall, for example within a range between 20% and 300% of a degree M representing a thickness of the holding portion 88a. Therefore, it is possible to curb damaging the radially outward peripheral end portion of the diaphragm spring 25. Further, it is possible to reduce the extent of sliding which may occur between the holding portion 88a and the radially outward peripheral end portion of the diaphragm spring 25, and to enhance an operability of the engagement-releasing member 88.

The bottom surface of the holding portion 88a is formed to be a flat structure. A vertical line (surface) running through a boundary line Q bounding the bottom surface of the holding portion 88a and the end portion P is arranged at a distance from a vertical line (surface) running through the center of the axial bore 88b, as denoted by an arrow K in Fig. 9B.

The axial bore 88b is formed at a predetermined position of the engagement-releasing member 88, and is employed as an axial bore for axially attaching the engagement-releasing member 88 to the peripheral surface of the adjustment wedge member 82 in such a manner that the engagement-releasing member 88 is freely rotatable. The axial bore 88b is inserted with a rivet 83c for fixing the adjusting pinion 83 to the adjustment wedge member 82.

The pushing portion 88c is a portion, out of an entire end portion of the engagement-releasing member 88, which can come in contact with an end surface of the pressure plate 24 facing the diaphragm spring 25. As is illustrated in Fig. 9A, a corner of the pushing portion 88c is formed to be a curved surface by means of a press working or a barrel polishing. A curvature radius of the corner (a curved surface) of the pushing portion 88c is designed to fall, for example within a range between 20% and 300%, of a degree M representing a thickness of the holding portion 88a. Therefore, it is possible to reduce the extent of sliding resistance which may occur between the pushing portion 88c and the pressure plate 24, and to enhance an operability of the engagement-releasing member 88.

The stopping portion 88d axially projects from a portion of the engagement-releasing member 88 between the holding portion 88a and the pushing portion 88c towards the diaphragm spring 25. This stopping portion 88d can come in contact with an inner peripheral surface of the clutch cover 22 at a time that abrasion of the clutch facings are compensated or adjusted. As is illustrated in Fig. 8A, when the friction clutch 20 is frictionally engaged, the stopping portion 88d is positioned with a predetermined spacing relative to the inner peripheral surface of the clutch cover 22. The pressure plate 24 is axially movable within this predetermined spacing in response to changes in the posture of the diaphragm spring 25. When the stopping portion 88d comes in contact with the inner peripheral surface of the clutch cover 22 in response to changes in the posture of the diaphragm spring 25, the pressure plate 24 can be restrained from a further movement in its axial direction to further approach the clutch cover 22, as illustrated in Fig. 8B. When the holding portion 88a is lifted up, by the diaphragm spring 25, towards the clutch cover 22, the stopping portion 88d is employed as a fulcrum for pushing the pressure plate 24 by the pushing portion 88c as illustrated in Fig. 8C, i.e., as a fulcrum for releasing the engagement between the adjustment pinion 83 and the upper rack 84 as illustrated in Fig. 7B.

As is illustrated in Fig. 9A, the stopping portion 88d is formed to curve towards a back face side from the main body of the engagement-releasing member 88 by means of a press molding. The curvature radius of the upper surface of the curved portion of the stopping portion 88d is designed to fall, for example within a range between 30% and 300% of a length L extending between a horizontal line (surface) running through a center of the axial bore 88b and a horizontal line (surface) running through a summit of the stopping portion 88d. Therefore, it is possible to reduce the extent of sliding resistance which may occur between the stopping portion 88d and the clutch cover 22, and to enhance an operability of the engagement-releasing member 88.

Further, as is illustrated in Fig. 9C, as an aerial view, a summit T of the upper surface of the curved portion of the stopping portion 88d is positioned at a radially inner side from the radially outward peripheral end portion of the diaphragm spring 25. The summit T of the stopping portion 88d is designed in such a manner that, as an aerial view, a distance V between the summit T of the stopping portion 88d and the radially outward peripheral end portion of the diaphragm spring 25 substantially falls in a range, for example between 10% and 300% of a distance U between a radially outer peripheral end portion of the stopping portion 88d and the radially outward peripheral end portion of the diaphragm spring 25. Therefore, it is possible to reduce a degree of slant of the engagement-releasing member 88 being rotated, and to enhance an operability of the engagement-releasing member 88.

The diaphragm spring 25 advances or retracts the clutch disc 23 in an axial direction via the pressure plate 24, as is illustrated in Figs, 2, 3, 5 and 6. The diaphragm spring 25 is formed with twelve elastic plate members 25a (hereinafter, referred to as lever members 25a) radially arranged along the inner periphery of the cylindrical hollow portion 22a of the clutch cover 22. The lever members 25a are held by the fulcrum forming portions 22c of the clutch cover 22 via a pair of ring shaped fulcrum members 25b and 25c, which both are attached to both axial sides of the diaphragm spring 25. The radially outward peripheral end portion of the diaphragm spring 25 is positioned between the holding portion 88a and the end surface of the adjustment wedge member 82. Therefore, the lever member 25a can be pivotably moved relative to the clutch cover 22 via the fulcrum members 25b and 25c (operational fulcrums).

As is illustrated in Fig. 2, the release bearing 26 is a bearing for operating the diaphragm spring 25 in response to the operation of the release fork 27. The release bearing 26 encloses an outer periphery of the input shaft 11a of the transmission 11, and is supported to be slidably movable relative to the input shaft 11a. The release veering 26 is formed with a force point portion 26a for pushing an inner end portion of each lever member 25a, i.e., a central side of the diaphragm spring 25, towards the flywheel 21.

The release fork 27 is a fork shaped member for slidably moving the release bearing 26 in an axial direction thereof in response to the running of the actuator 30. One end of the release fork 27 is in contact with the release bearing 26 and the other end thereof is in contact with a tip end portion of the rod 31 of the actuator 30. The release fork 27 is assembled at the pivot supporting member 28 by a spring 27a fixed to a transmission case 11a. The release fork 27 is further designed to be pivotably moved with the pivot-supporting member 28 as a fulcrum via an approximately central portion 27b of the release fork 27. The pivot-supporting member 28 is a member for pivotably supporting the release fork 27 and is fixed to the transmission case 11b.

As illustrated in Fig. 1, the actuator 30 is an electrically driven mechanism for moving a rod 31 in forward and reward direction and for controlling a clutch operation of the friction clutch 20. The actuator 30 applies a force, by which an engagement condition of the clutch disc 23 is switched, to the diaphragm spring 25 via the release fork 27 and the release bearing 26. The actuator 30 includes the rod 31, a DC motor 32, a housing 33, a rotational shaft 34, a sector gear 35 and an assist spring 36.

The rod 31 (Fig. 2) is a member being inserted into the housing 33 so as to be movable in the forward and rearward directions. The rod 31 is in contact with the release fork 27 at a tip end portion outside the housing 33, and is attached to a sector gear 35 at a base end portion which is opposite to the tip end portion being in contact with the release fork 27. The electric motor 32 is attached to the housing 33 from the outside, and rotates the rotational shaft 34 in the housing 33.

The housing 33 is fixedly mounted at an appropriate position of the vehicle and supports the electric motor 32. In the housing 33, there are the rotational shaft 34, the sector gear 35 and an assist spring 26 being housed.

The rotational shaft 34 is housed in the housing 33 and is rotatably driven by the DC motor 32, as illustrated in Fig. 2. The rotational shaft 34 is formed with a worm gear being engaged with the sector gear 35. The sector gear 35 in a circular arc-shaped side surface is pivotably supported in the housing 33. The sector gear 35 is formed with a gear at an edge surface of the arc portion and is engaged with the worm gear of the rotational shaft 34.

The assist spring 36 is preset to be compressed when the sector gear 35 is within a pivotably movable range thereof, and can be expanded and compressed in the housing 33. One end of the assist spring 36 is engaged with a rear end portion of the housing 33, and the other end thereof is engaged with the sector gear 35. Therefore, when the sector gear 35 rotates beyond a predetermined rotational angle in a clockwise direction, the assist spring 36 biases the sector gear 35 in a clockwise direction. That is, the assist spring 36 biases the rod 31 in a right direction in Fig. 2 and assist the DC motor 32 in moving the rod 31 in the right direction.

As described above, according to the first embodiment of the present invention, in response to activation of the DC motor 32, the sector gear 35 is rotated via the rotational shaft 34, and the rod 31 is moved in the forward and rearward directions relative to the housing 33. As is illustrated in Fig. 1, the clutch control circuit 40 is a control circuit for outputting a drive command signal to the actuator 30 and for controlling the running of the actuator 30. The clutch control circuit (i.e., a controller) 40 includes a microcomputer (CPU) 41, interfaces 42-44, an electric power source circuit 45, and a drive circuit 46. The CPU 41 incorporates, therein, a read only memory (ROM) and a random access memory (RAM), which both store programs, maps and so on.

The interface 42 is connected to the CPU 41 via a bus and is further connected to a shift lever load sensor 51, a vehicle speed sensor 52 for detecting a vehicle speed V, a gear position sensor 53 for detecting a shift stage actually selected in the transmission 11, a transmission input shaft rotational speed sensor 54 for detecting a rotational speed of the input shaft 11a of the transmission 11, and a stroke sensor 37. The interface 42 is able to supply signals detected by the respective sensors to the CPU 41. The shift lever load sensor 51 is employed for detecting a degree of load generated upon a driver's manual operation of a shift lever (not shown) of the transmission 11, i.e., for detecting a shift lever load. The stroke sensor 37 is employed for detecting a stroke ST of the rod 31 by detecting an angle of the pivotably rotating sector gear 35.

The interface 43 is connected to the CPU 41 via a bus and is further connected to an engine control unit 60 for mutually communicating each other. The engine control unit 60 is connected to a throttle opening degree sensor 55 and an engine rotational speed sensor 56 so as to output a signal detected by each sensor 55 and 56 to the CPU 41.

The interface 44 is connected to the CPU 41 via a bus and is further connected to an input terminal of an OR circuit 45a of the electric power source circuit 45 and the driving circuit 46. The interface 44 transmits, based upon commands from the CPU 41, predetermined signals to the electric power source circuit 45 and the drive circuit 46.

The electric power source circuit 45 incorporates, therein, the OR circuit 45a, a power transistor Tr and a constant voltage circuit 45b. A base portion of the power transistor Tr is connected to an output end of the OR circuit 45a. A collector of the power transistor Tr is connected to a plus terminal of a battery 70 mounted on the vehicle, and an emitter thereof is connected to the constant voltage circuit 45b and the driving circuit 46. Therefore, electric power is supplied to each of the constant voltage circuit 45b and the driving circuit 46 from the power transistor Tr when the power transistor Tr is turned on. The constant voltage circuit 45b is employed for converting a battery voltage to a constant voltage (5V) and for supplying the electric power to the CPU 41 and the interfaces 42, 43, 44 which all are connected to the constant voltage circuit 45b. The other input terminal of the OR circuit 45a is connected to one end of an ignition switch 71 manually operated to be turned on and off by the driver. The other end of the ignition switch 71 is connected to the plus terminal of the battery 70. The one end of the ignition switch 71 is also connected to the interface 42 so that the CPU 41 can detect the condition of the ignition switch 71.

The driving circuit 46 incorporates, therein, four switching elements (not shown) turned on and off by command signals from the interface 44. The switching elements forming a known bridge circuit are selectively controlled to be under a conducted condition, and a period of time, for which the switching elements are being conductive, is controlled. Therefore, the switching elements can supply an arbitrary amount of electric current to the DC motor 32 in a predetermined direction and in a reverse direction thereof.

The engine control unit 60 is provided with a microcomputer (not shown) as a main element thereof and is employed for controlling fuel oil consumption of the engine 10 and an ignition timing thereof. As described above, the engine control unit 60 is connected to the throttle opening degree sensor 55 for detecting the throttle opening degree TA of the engine 10 and the engine rotational speed sensor 56 for detecting the rotational number N_{E} of the engine 10. Further, the engine control unit 60 performs an inputting process of the signal of each sensor and a calculating process based upon the signal.

Next, described below is a clutch control apparatus according to the second embodiment of the present invention, a clutch control apparatus which is employed for controlling engagement and disengagement of the friction clutch 20. Most of the structure, and the operation, of the clutch control apparatus according to the second embodiment is substantially equal to the ones of the clutch control apparatus according to the first embodiment. Hereinafter, the same structure, and the same operation, as the first embodiment are not repeatedly explained, in order to simplify the entire description, and components, which are employed in both second and first embodiments, are explained with the same reference numerals. Thus, only different structures and operations are described in detail below.

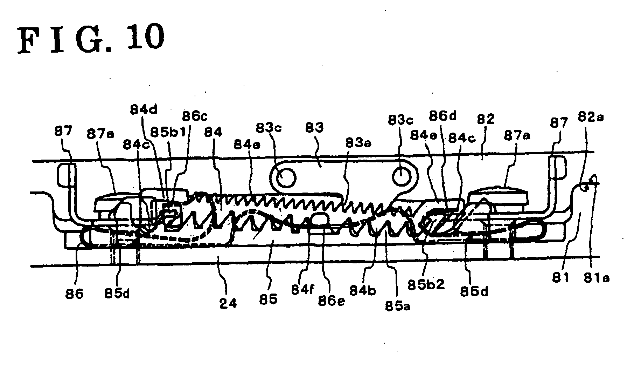

As is illustrated in Fig. 10, the adjustment pinion 83 is secured to an inner peripheral surface of the adjustment wedge member 82 by means of rivets 83c. The adjustment pinion 83 is formed with the pinion teeth 83a (Fig. 10) which outstands along the axial direction from the diaphragm spring 25 to the pressure plate 24. The pinion teeth 83a can be in a saw-toothed structure or can be shaped of triangle with equal spacing therebetween, as non-limiting examples. The adjustment pinion 83 is formed with grooves 83b in the vicinity of portions (e.g., the bottoms of gullets of the pinion teeth 83a), which come in contact with (the first rack teeth 84a of) the upper rack 84, These grooves 83b are employed for the purpose of accumulating friction powders generated in response to abrasion of the clutch disc 23. The adjustment pinion 83 is surface-treated so that a degree of sliding resistance between the adjustment pinion 83 and the upper rack 84 can be effectively lowered. As one of non-limiting examples of the surface-treatment of the adjustment pinion 83, a heat-resistant material (e.g., a stainless material) is press-molded and is surface-treated with a self-lubricating material such as a fluorinated resin-containing electroless nickel plating.

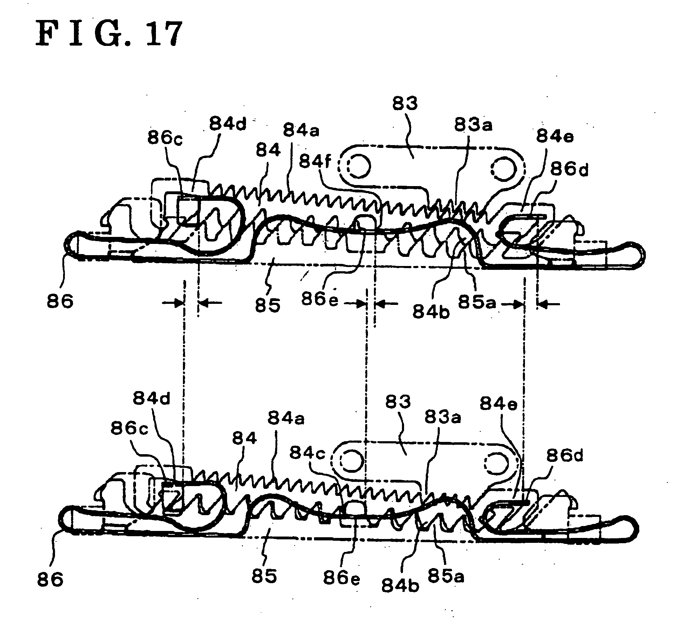

Likewise as the adjustment pinion 83 aforementioned, the upper rack 84 is also surface-treated, for example with a material such as above, for the purpose of lowering a degree of sliding resistance of the upper rack 84 relative to the adjustment pinion 83 and relative to the lower rack 85. As is illustrated in Fig. 17, the upper rack 84 is provided with a first receiving portion 84d, a second receiving portion 84e and a third receiving portion 84f. The first receiving portion 84d is formed in the vicinity of one end at the left side (in the lateral direction in Fig. 17) of the upper rack 84 and is applied with a biasing force of a first pawl portion 86c of the biasing member 86. The second receiving portion 84e is formed in the vicinity of the other end at the right side (in the lateral direction in Fig. 17) of the upper rack 84 and is applied with a biasing force of a second pawl portion 86d of the biasing member 86. The third receiving portion 84f is formed in the vicinity of a central portion (in the lateral direction in Fig. 17) of the upper rack 84 and is applied with a biasing force of a third pawl portion 86e of the biasing member 86.

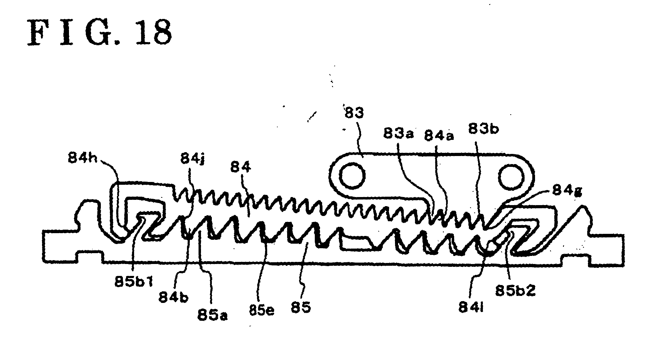

As is illustrated in Fig. 18, the upper rack 84 is formed with grooves 84g, 84h, 84i and 84j which is capable of accumulating friction powders generated in response to abrasion of the clutch disc 23. The grooves 84g are formed in the vicinity of portions (e.g., the bottoms of gullets of the pinion teeth 83a), which come in contact with the pinion teeth 83a of the adjustment pinion 83. The groove 84h is formed in the vicinity of a portion which comes in contact with the first projection 85b1. The groove 84i is formed in the vicinity of a portion which comes in contact with the second projection 85b2. The grooves 84j are formed in the vicinity of portions (e.g., the bottoms of gullets of the second rack teeth 84b), which come in contact with the lower rack teeth 85a of the lower rack 85.

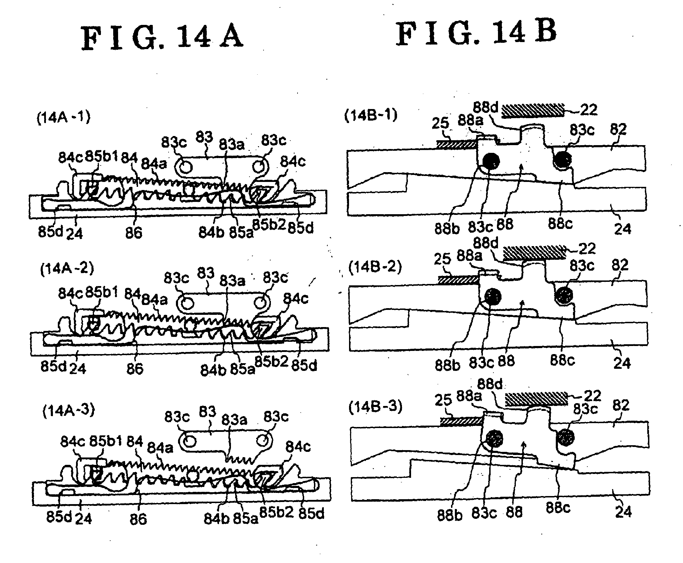

As described above, according to the first embodiment of the present invention, the lower rack 85 is provided with the notch 85c (Fig. 7) for extending the biasing member 86 to the projection 85b2 along the outer periphery of the lower rack 85. However, according to the second embodiment of the present invention, notches 85d and 85d (Fig. 14A) are formed at both lateral ends of the lower rack 85, in substitution for the notch 85c (Fig. 7), for the purpose of bridging supporting portions 86f and 86g of the biasing member 86. The lower rack 85 is formed with grooves 85e which are capable of accumulating friction powders generated in response to abrasion of the clutch disc 23. The grooves 85e are formed in the vicinity of portions (e.g., the bottoms of gullets of the lower rack teeth 85a) which come in contact with (the second rack teeth 84b of) the upper rack 84. Likewise as the adjustment pinion 83, the lower rack 85 is surface-treated in order to lower a degree of sliding resistance relative to the upper rack 84.

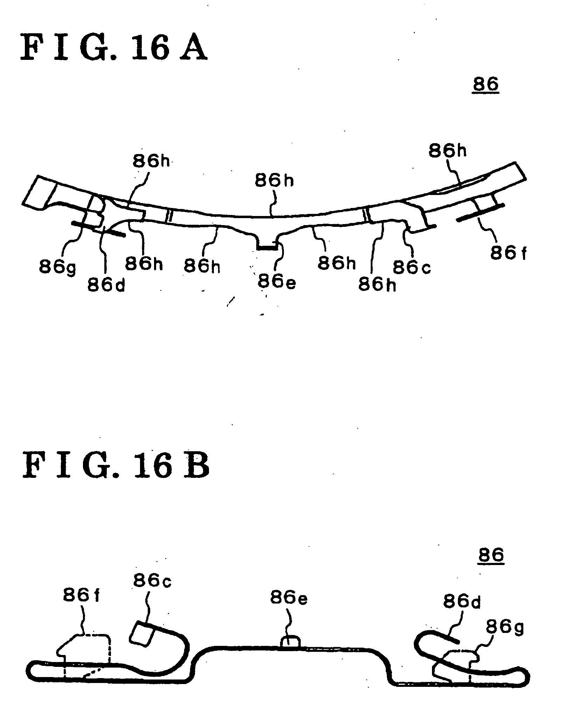

As is illustrated in Fig.16, the biasing member 86 is a curved plate member which biases the upper rack 84 in a direction for releasing the engagement between the upper rack 84 and the lower rack 85. A main portion of the biasing member 86 extends along the inner peripheral side of the lower rack 85. The biasing member 86 is provided with the supporting portions 86f and 86g being bridged over the notches 85d and 85d of the lower rack 85, the supporting portions 86f and 86g by which the biasing member 86 is supported at the lower rack 85. Both ends of the biasing member 86 is curbed having predetermined shapes and extend to the vicinity of the first receiving portion 84d and the second receiving portion 84e. At, or in the vicinity of, both ends of the biasing member 86, there are the first pawl portion 86c and the second pawl portion 86d being formed. The first pawl portion 86c is placed so as to bridge the first receiving portion 84d of the upper rack 84, while the second pawl portion 86d is placed so as to bridge the second receiving portion 84e. Therefore, while the second rack teeth 84b slidably moves at the lower rack teeth 85a by the biasing force of the main body of the biasing member 86, the first pawl portion 86c and the second pawl portion 86d both serve to bias the upper rack 84 in a direction for releasing the engagement between the upper rack 84 and the lower rack 85. A central portion of the biasing member 86 is curbed with a predetermined shape and extend to the vicinity of the third receiving portion 84f. The third pawl portion 86e is formed adjacent to the third receiving portion 84f. The third receiving portion 84f is placed so as to bridge the third receiving portion 84f of the upper rack 84. Therefore, while the second rack teeth 84b slidably moves at the lower rack teeth 85a by the biasing force of the main body of the biasing member 86, the third pawl 86e serves to bias the upper rack 84 in a direction for releasing the engagement between the upper rack 84 and the lower rack 85, or upwardly, as illustrated in Fig. 17. The main body of the biasing member 86 is provided with notches 86h in the vicinity of the upper rack 84 and the pressure plate 24, especially in the vicinity of the first pawl portion 86c, the second pawl portion 86d and the third pawl portion 86f. Therefore, according to the second embodiment of the present invention, it is possible to curb sliding resistance which may occur due to interferences (contacts) of the biasing member 86 against the upper rack 84 and the pressure plate 24. Further, according to the second embodiment of the present invention, it is possible to arbitrarily design degrees of biasing forces, and biasing directions, of the first pawl portion 86c, the second pawl portion 86d and the third pawl portion 86e. A certain manufacturing method of manufacturing the biasing member 86 can be employed in order to prevent a degree of biasing force from dying or from being attenuated, dying or attenuation which may occur due to frictional heat generated in response to friction of the clutch disc 23. As one of non-limiting examples of the manufacturing methods of manufacturing the biasing member 86, a heat-resisting material (e.g., a stainless material for a spring) is press-molded and is annealed under general conditions. Accordingly, even when frictional heat, which is generated due to friction between the pressure plate 24 and the clutch disc 23, is subjected to the biasing member 86, it is possible to prevent a degree of biasing force of the biasing member 86 from dying or being attenuated.

The fixing plate member 87 is formed to be longitudinally longer than the lower rack 85 in a circumferential direction and is attached to the pressure plate 24 by means of screws 87a along the outer periphery of the taper portion 81, as illustrated in Fig. 3. The fixing plate member 87 is capable of fixedly stabilizing the lower rack 85 and the biasing member 86, and is formed so as to be fitted with the pressure plate 24.

The pushing portion 88c is a portion, out of an entire end portion of the engagement-releasing member 88, which can come in contact with an end surface of the pressure plate 24 facing the diaphragm spring 25. The pushing portion 88c pushes the pressure plate 24 in response to rotation of the engagement-releasing member 88.

Next, described below is the operation of the clutch control apparatus according to the first and second embodiments of the present invention. The actuator 30 automatically performs the engagement and disengagement operations of the clutch 20 in substitution for the manual clutch pedal operation by the driver. That is, the engagement and disengagement operations of the clutch 20 are performed, for example, when at least one of the following three conditions is satisfied; (1) when the CPU 41 detects that the vehicle state is shifting from a vehicle running state to a vehicle stationary state, e.g. when the rotational speed of the input shaft 11a of the transmission 11 becomes equal to, or less than, a predetermined speed value, (2) when the CPU 41 detects that the load detected by the shift lever load sensor 51 becomes equal to, or greater than, a predetermined load value, e.g. when the intention of the driver to change a shift stage is recognized, and (3) when the CPU 41 detects a depressing operation of an accelerator pedal (not shown) while the vehicle is in the stationary state.

Next, described below is transmission of a driving force of the engine 10 to the transmission 11 via the friction clutch 20 being engaged in the clutch control apparatus for use in a vehicle according to the first and second embodiments of the present invention. A predetermined electric current is first supplied to the DC motor 32 from the driving circuit 46 based upon the command signal from the clutch control circuit 40 so that the DC motor 32 is rotatably driven. Therefore, the sector gear 35 is rotated in a counterclockwise direction and the rod 31 is moved in the left direction in Fig. 2.

On the other hand, the release bearing 26 is applied with force by the diaphragm spring 25 in a direction to be moved away from the flywheel 21, i.e. in the right direction in Fig. 2. The force is transmitted to the release fork 27 via the release bearing 26 so that the release fork 27 is applied with a force to be pivotably moved with the pivot-supporting member 28 as the fulcrum in the counterclockwise direction in Fig. 2. Therefore, the central portion of the diaphragm spring 25 is shifted in the direction to be away from the flywheel 21.

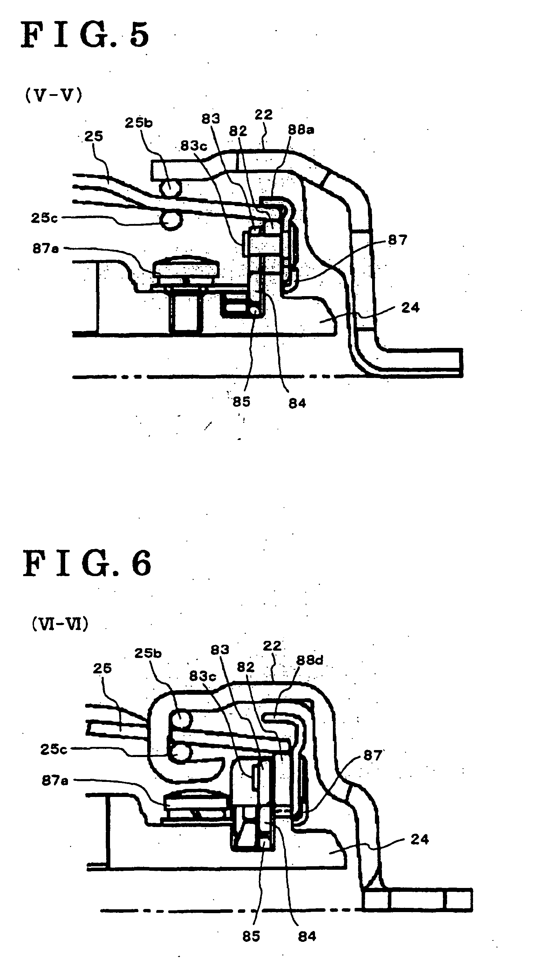

Referring to Figs. 5 and 6, the diaphragm spring 25 is pivotably moved, i.e. the posture of the diaphragm spring 25 varies, with a center on the fulcrum members 25b and 25c and pushes the adjustment wedge member 82, which is in contact with the radially outward peripheral end portion of the diaphragm spring 25, towards the flywheel 21. The pressure plate 24 is hence applied with a force to be moved towards the flywheel 21 via the taper portion 81 so that the clutch disc 23 is gripped between the pressure plate 24 and the flywheel 21. At or about the same time, the pressure plate 24 is applied with a force to be moved towards the flywheel 21 via the adjustment pinion 83, the upper rack 84, and the lower rack 85. Therefore, the engaged condition between the pinion teeth 83a and the first rack teeth 84a is maintained, and the engaged condition between the second rack teeth 84b and the lower rack teeth 85a is maintained. The adjustment pinion 83 is hence not allowed to rotate relative to the lower rack 85 so that the adjustment wedge member 82 is not rotated relative to the pressure plate 24. Therefore, while a constant spacing is maintained between the pressure plate 24 and the radially outward peripheral end portion of the diaphragm spring 25, the clutch disc 23 is frictionally engaged with the flywheel 21 and rotate integrally therewith, wherein a driving force of the engine 10 is transmitted to the transmission 11.

Next, described below is not to transmit a driving force of the engine 10 to the transmission 11 via the friction clutch 20 being disengaged in the clutch control apparatus for use in a vehicle according to the first and second embodiments of the present invention. The sector gear 35 is rotated in the clockwise direction in Fig. 2 in response to the operation of the DC motor 32. The rod 31 is then moved in the right direction in Fig. 2 and applies a force to the release fork 27 to be moved in the right direction in Fig. 2 via the contact portion 27a. The release fork 27 is then pivotably rotated in the clockwise in Fig. 2 with the supporting point of the pivot-supporting member 28 as the fulcrum. Therefore, the release bearing 26 is moved towards the flywheel 21.

The diaphragm spring 25 is applied with a force to be moved towards the fly wheel 21 at the force point portion 26a so as to be pivotably rotated with a center on the fulcrum members 25b, 25c. The radially outward peripheral end portion of the diaphragm spring 25 is hence moved away from the flywheel 21. Therefore, the force pushing the pressure plate 24 towards the flywheel 21 via the adjustment wedge member 82 is reduced. The pressure plate 24 is connected to the clutch cover 22 via the strap 24a and is always biased to be moved away from the flywheel 21. The pressure plate 24 is hence slightly separated from the clutch disc 23 by the biasing force. Therefore, the clutch disc 23 is released from being engaged, and the driving power of the engine 10 is not transmitted to the transmission 11.

When the friction clutch 20 is being disengaged during a vehicle normal driving condition, the stroke ST of the rod 31 is constrained into a range in which the stopping portion 88d of the engagement-releasing member 88 does not come in contact with the clutch cover 22. In such circumstances, the axial spaced amount between the pressure plate 24 and the diaphragm spring 25 is not changed. Therefore, as is illustrated in Fig. 7A, the engagement between the pinion teeth 83a of the adjustment pinion 83 and the first rack teeth 84a of the upper rack 84 is maintained, and the engagement between the lower rack teeth 85a of the lower rack 85 and the second rack teeth 84b of the upper rack 84 is maintained. Therefore, the adjusting wedge member 82 is not rotated relative to the pressure plate 24. In other words, when the friction clutch 20 is being disengaged, the stroke ST of the rod 31 is designed at the extent by which the engagement between the first pinion teeth 83a of the adjustment pinion 83 and the first rack teeth 84a of the upper rack 84 is not released, and the engagement between the lower rack 85a of the lower rack 85 and the second rack teeth 84b of the upper rack 84 is not released.

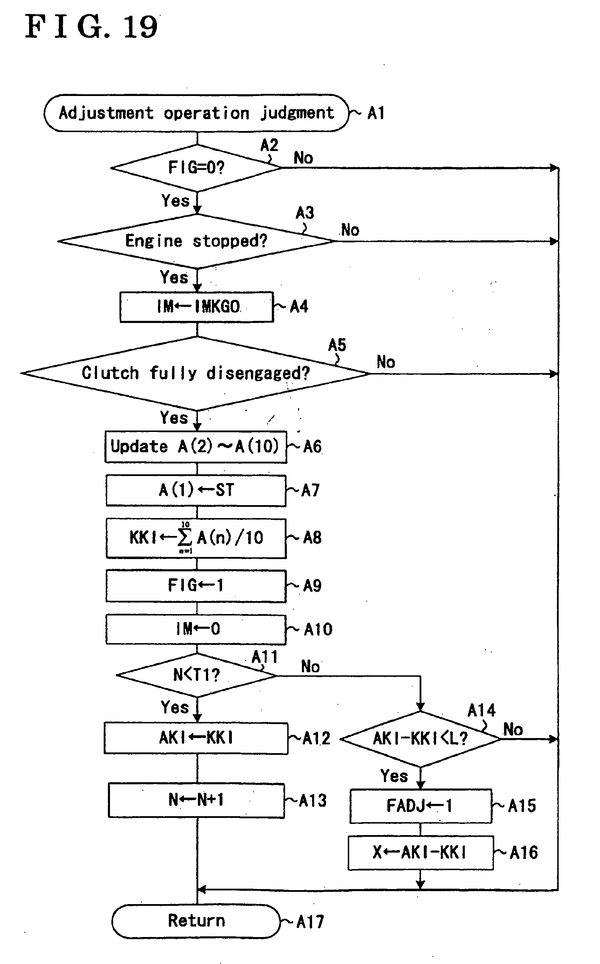

Next, an operation for compensating for the abrasion of the clutch facings 23a, 23b according to the first and second embodiments of the present invention is described below with reference to flowcharts illustrated in Figs.19-21.

In the first place, described blow is an operation for compensating for a clutch abrasion at a time that an amount of abrasion of the clutch facings 23a and 23b has not progressed, for example immediately after the abrasion compensating operation (an adjusting operation) of the clutch disc 23, immediately after a shipment from a factory, immediately after replacing the clutch disc 23 with a new one, and so on.

As far as the CPU 41 is supplied with electric power, the CPU 41 repeats, at a predetermined time base, the program representing a routine (an algorithm) for judging whether the adjusting operation is needed. The CPU 41 starts this program in step A1 in Fig. 19. In step A2, the CPU 41 confirms whether a value for a flag FIG has been set at "0".

When the ignition switch 71 is turned on from an off state, this flag FIG is set to "0" by a program representing an initialization routine (an initialization algorithm) implemented by the CPU 41. On the other hand, when values or data memorized in buffers A(1) through A(10) are updated, this flag FIG is set to "1".

As described above, the value for the flag FIG is found to be "0" at an event that the values memorized in the buffers A(1) through A(10) have not been updated after the switching on operation of the ignition switch 71 from the off state. Therefore, an affirmative answer "Yes" is obtained at step A2 and the program proceeds to step A3. On the other hand, once the values memorized in the buffers A(1) through A(10) are updated, the value for the flag FIG is set to "1" so that a negative answer "No" is obtained in step A2. Therefore, the program proceeds to step A17 and is terminated.

In step A3, the CPU 41 determines whether the engine 10 has already been stopped. More specifically, the CPU 41 determines that the engine 10 has been stopped when the engine rotational number N_{E} is "0" or when a sufficient time has passed since the ignition switch 71 has been turned off from an on state. When an affirmative answer "Yes" is obtained at step A3, the program proceeds to step A4. When a negative answer "No" is obtained at step A3, the program proceeds to step A17 and is terminated.

When the CPU 41 determines that the engine 10 has been stopped and the program proceeds to step A4, an electric current IM to be sullied to the electric motor 32 is assigned "IMKGO" which represents a full-engagement electric current value. As a result, the rod 31 is moved in the left direction in Fig. 2 in response to the running of the DC motor 32 so that the clutch disc 23 is gradually engaged with the flywheel 21.

The program then proceeds to step A5 for determining whether the clutch 20 is under the fully engaged condition. More specifically, the CPU 41 determines that the clutch 20 is under the fully engaged condition if a sufficient time has passed since the electric current IM to be supplied to the DC motor 32 has been assigned "IMKGO", or if that the stroke ST detected by the stroke sensor 37 has not been changed over a predetermined period of time. When the CPU 41 determines that the clutch 20 has not reached the fully engaged condition yet, a negative answer "No" is obtained at step A5 so that the program proceeds to step A17 and is terminated.

Even subsequently, the judgments at steps A2, A3 and A5 are repeated by the CPU 41 at a predetermined clock cycle. When a condition, in which the value for the flag FIG is set at "0" and the engine 10 has been stopped, is continued for a period of time required for engaging the clutch 20, an affirmative answer "Yes" is obtained at step A5 and the program proceeds to step A6. If the engine 10 is driven before the affirmative answer "Yes" is obtained at step A5, the DC motor 32 is supplied with an amount of electric current corresponding to each condition by a program (not illustrated) representing another routine (algorithm). Therefore, according to the first and second embodiments of the present invention, an appropriate clutch engagement control can be implemented.

When the program proceeds to step A6 in a condition in which the friction clutch 20 is being fully frictionally engaged, nine values respectively memorized in the buffers A(2) through A(10) are updated. More specifically, assuming that "n" represents natural numbers from 1 to 9, the values memorized in the buffer A(n) is sequentially shifted to a buffer A(n+1). The buffer A(10) before being updated is deleted.

The program then proceeds to step A7 for updating or assigning the buffer A(1) with an actual stroke ST detected by the stroke sensor 37. The program then proceeds to step A8 for calculating a simple average value of the ten values memorized in the respective buffers A(1) through A(10) and for assigning the simple average value to a fully engagement position KKI. The program then proceeds to step A9 to set the value for the flag FIG to "1". At step A10, the electric current IM is set to "0" so as to stop the electric current supply to the DC motor 32.

At step A11, the CPU 41 determines whether a value for a counter N is smaller than a predetermined value T1. According to the first and second embodiments of the present invention, the predetermined value T1 is "10". As described later, the counter N is set to "0" at either one of the cases: when the abrasion compensating operation of the clutch disc 23 was performed, when the apparatus is shipped from the factory, or when the clutch disc 23 is replaced with a new one. At this moment, either one of the above cases are selected, and the value for the counter N has been set at "0". Therefore, in this case, an affirmative answer "Yes" is obtained at step A11, and the program proceeds to step S12. At step A12, the fully engagement position KKI obtained at step A8 is assigned to an adjustment reference position AKI. At step A13, the CPU 41 increments the value for the counter N by "1". The program then proceeds to step A17 and is terminated.

Even subsequently, the above-described routine is implemented by the CPU 41 at a predetermined time cycle. On the other hand, unless the ignition switch 71 is turned on from the off state, the value for the flag FIG is maintained at "1". Therefore, an affirmative answer "No" is obtained at step A2, and the program proceeds to step A17. In this case, the fully engagement position KKI and the adjustment reference position AKI are not updated or newly assigned.

Subsequently, when the ignition switch 71 is turned off from the on state, and is turned on from the off state, the value for the flag FIG is set to "0". Therefore, an affirmative answer "Yes" is obtained at step A2, and the program proceeds to step A3 and the following steps. Therefore, the above-described proceeding is carried out. When conditions, such as an engine stop, a clutch full engagement, and so on, are satisfied, at step A12, the adjustment reference position AKI is updated or newly assigned, and at step A13, the value for the counter N is incremented by "1".

Upon repeatedly performing the above described operations, the values for the buffers A(1) through A(10) are sequentially updated and the adjustment reference position AKI is updated or newly assigned. Further, the value for the counter N is gradually incremented. Therefore, after the value for counter N reaches, at step A13, the predetermined value T1 (10), if the determination at step A11 is implemented again, a negative answer "No" is obtained at step A11, and the program proceeds to step A14. In this case, a difference, or an absolute value of a difference, between the adjustment reference position AKI and the fully engagement position KKI is smaller than a predetermined threshold value L. Therefore, a negative answer "No" is obtained at step A14. The program then proceeds to step A17 and is terminated.

After that, while the operations in steps A3 through A8 are performed, the fully engagement position KKI is updated or newly assigned corresponding to the extent of the abrasion of the clutch facings 23a and 23b. The value for the counter N is maintained to be greater than the predetermined value T1. Therefore, a negative answer "No" is obtained at step A11 so that the program proceeds to step A14. In this case, the operation in step A12 is not performed. The adjustment reference position AKI is hence maintained at a value immediately after the adjusting operation, at a value immediately after the shipment from the factory, or at a value immediately after the clutch disc 23 was replaced with a new one.

Further after that, the clutch facings 23a and 23b are abraded through the repeatedly performed engagement and disengagement operations of the clutch 20 while the vehicle has been driven for a long period of time. In such circumstances, the difference between the adjustment reference position AKI and the fully engagement position KKI then becomes greater than the predetermined threshold value L. In such a case, an affirmative answer "Yes" is obtained at step A14 and the program proceeds to step A15. At step A15, the CPU 41 sets a value for an adjusting operation requiring flag FADJ to "1". The adjusting operation requiring flag FADJ set at "1" represents that the adjusting operation should be performed.

At step A16, the difference between the adjustment reference position AKI and the fully engagement position KKI is assigned to an abrasion amount X (a necessary adjusting amount) of the clutch facings 23a, 23b. The program then proceeds to step A17, and is terminated. As described above, the value for the adjusting operation requiring flag FADJ is set to "1" when the extent of the abrasion of the clutch facings 23a and 23b has been progressed.

According to the first and second embodiments of the present invention, the fully engagement position KKI is updated or newly assigned only when the engine 10 has been stopped. Therefore, the friction clutch 20 is not affected by vibrations of the engine 10, and the fully engagement position KKI can be determined with a high degree of precision. Further, according to the first and second embodiments of the present invention, the fully engagement position KKI is determined by averaging the strokes of the rod 31 at every ten fully engagement operation of the clutch 20 memorized in the buffers A(1) to 1(10). Therefore, it is possible to determine the fully engagement position KKI with an improved degree of precision.

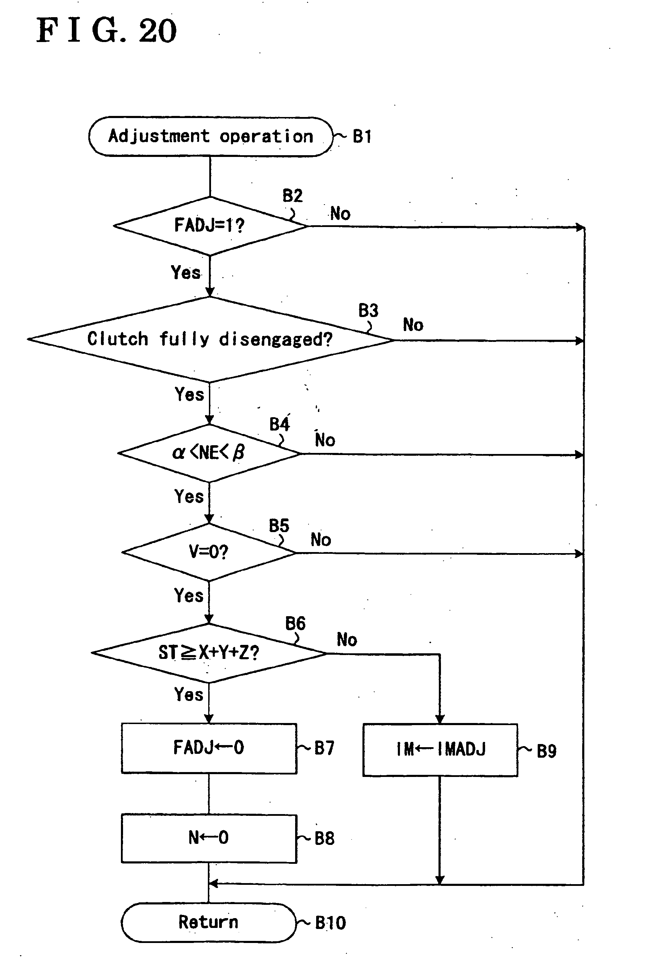

Next, an operation for actually performing the adjusting operation is described with reference to a flowchart illustrated in Fig. 20. The operation is described assuming that an affirmative answer "Yes" is obtained at steps B2 through B5. The CPU 41 performs, at a predetermined period of time basis, a program illustrated in Fig. 20 representing a routine for the adjusting operation. Therefore, at a predetermined timing, this program is started at step B1 and proceeds to step B2. At step B2, the CPU 41 confirms whether the value for the adjusting operation requiring flag FADJ is set at "1" or not. This process at step B2 is employed for performing the adjusting operation only when the adjusting operation is required.

On the basis of the aforementioned assumption, the value for the adjusting operation requiring flag FADJ has been set at "1". Therefore, an affirmative answer "Yes" is obtained at step B2 so that the program proceeds to step B3 for determining whether the clutch disc 23 is under the disengagement condition. This operation is necessary because the adjusting operation can not be performed while the friction, clutch 20 is being engaged.

On the basis of the aforementioned assumption, the clutch disc 23 is at the disengaged condition. Therefore, an affirmative answer "Yes". can be obtained at step B3 and the program proceeds to step B4. At step B4, the CPU 41 determines whether the engine rotational speed Ne is greater than a low speed-side predetermined rotational speed a (e.g., 400 rpm which is a minimum rotational speed required for driving the engine 10) and is smaller than a high speed-side predetermined rotational speed β (e.g., 2000 rpm at which the vibration of the engine 10 is increased).

The determination at step B4 is preferable or further necessary in order to curb an error adjustment by performing this adjusting operation at an event that an actual engine rotational speed is low and resonance of the friction clutch 20 does not hence occur. According to the first and second embodiments of the present invention, this adjusting operation is performed only when the engine rotational speed Ne is greater than the low speed-side predetermined rotational speed a, because it is not preferable that the adjusting operation, by which the clutch disc 23 is disengaged, is performed at a "gear-parking" by which a vehicle is parked in a state where a predetermined shift stage gear is engaged. As far as the engine rotational speed Ne of the engine 10 is equal to, or greater than, the predetermined rotational speed a, the CPU 41 can determine that the vehicle is not at a gear-parking condition.

On the basis of the aforementioned assumption, an affirmative answer "Yes" is obtained at step B4 and the program proceeds to step B5 for determining whether the vehicle speed V is set at "0". This determination at step B5 is preferable or is necessary in order to curb an error adjustment which may occur due to vibrations associated with a vehicle driving. On the basis of the aforementioned assumption, here, a vehicle has been stopped, and the vehicle speed V is set at "0". Therefore, an affirmative answer "Yes" is obtained at step B5, and the program proceeds to step B6. As described above, steps B2 through B5 are implemented for the purpose of determining whether conditions for actually commencing the adjusting operation have been satisfied.

At step B6, the CPU 41 confirms whether the stroke ST substantially corresponds to a value in which the abrasion amount X is added with a predetermined spacing Y and a predetermined spacing Z. The predetermined spacing Y corresponds to an axial spacing between the stopping portion 88d and the inner peripheral surface of the clutch cover 22 at a time that the friction clutch 20 is at an engaged condition, and an amount of abrasion of the clutch facings 23a and 23b has not progressed. The amount of abrasion of the clutch facings 23a and 23b has not progressed, for example immediately after performing the adjusting operation of the clutch disc 23, upon a shipment from a factory, immediately after replacing the clutch disc 23 with a new one, and so on. The predetermined spacing Y is approximately equivalent to the maximum value of a stroke ST0 which is needed for disengaging the friction clutch 20 during a vehicle normal driving condition. The predetermined spacing Z is an axial distance, at which the adjustment wedge member 82 moves relative to the pressure plate 24 by the time when the pinion teeth 83a of the adjustment pinion 83 is disengaged from the first rack teeth 84a of the upper rack 84, i.e., is an axial distance at which the adjustment pinion 83 is moved relative to the lower rack 85.

At this moment, the clutch 20 is under the normal engaged condition so that the stroke ST is equal to the stroke ST0. Therefore, a negative answer "No" is obtained at step B6 so that the program proceeds to step B9. At step B9, the electric current IM to be supplied to the electric motor 32 is updated with, or is assigned with, an adjustment electric current value IMADJ. Therefore, the stroke ST gradually approaches a judgment value (X + Y + Z) employed at step B6. The program then proceeds to step B10 and is terminated.

Also after that, the CPU 41 then repeats the above-described routine at the predetermined time basis. That is, the CPU 41 monitors, at steps B2 through B5, whether the conditions for performing the adjusting operation have been satisfied. At step B6, the CPU 41 monitors whether the stroke ST has achieved the judgment value (X + Y + Z).

As the predetermined period of time passes, the posture of the diaphragm spring 25 is changed. That is, the central portion of the diaphragm spring 25 is applied with the force to be moved towards the flywheel 21 via the force point portion 26a. The diaphragm spring 25 is pivotally moved with a center on the fulcrum members 25b, 25c and the radially outward peripheral end portion of the diaphragm spring 25 is gradually moved away from the pressure plate 24. Therefore, the stopping portion 88d of the engagement-releasing member 88 comes in contact with the inner peripheral surface of the clutch cover 22. The pressure plate 24 is always being applied with the biasing force of the strap 24a. Therefore, until the stopping portion 88d of the engagement-releasing member 88 comes in contact with the inner peripheral surface of the clutch cover 22, the taper portion 81 of the pressure plate 24 is also shifted in the axial direction in response to the axial movement of the adjustment wedge member 82 shifting with the radially outward peripheral end portion of the diaphragm spring 25. The adjustment pinion 83 and the cam means 85 cannot be hence moved relatively in the axial direction. Therefore, the engaged condition between the pinion teeth 83a of the adjustment pinion 83 and the first rack teeth 84a of the upper rack 84, and the engaged condition between the lower rack teeth 85a of the lower rack 85 and the second rack teeth 84b of the upper rack 84, can be maintained.

In this case, the stoke ST is equal to a value (X + Y) being smaller than the judgment value (X + Y + Z). Therefore, a negative answer "No" is obtained at step B6 and the program proceeds to step B9. In this case, the electric current value IMADJ can be continuously supplied to the DC motor 32 so that the posture of the diaphragm spring 25 is further varied. The stopping portion 88d is already in contact with the inner peripheral surface of the clutch cover 22 so that the further axial movement of the pressure plate 24 can be restrained. However, in the course of continuous changes in the posture of the diaphragm spring 24, the radially outward peripheral end portion of the diaphragm spring 25 is further moved away from the flywheel 21. As a result, the holding portion 88a of the engagement-releasing member 88 is directly applied with a force from the radially outward peripheral end portion of the diaphragm spring 25 moving, and the adjustment wedge member 82 fixed to the engagement-releasing member 88 is moved in the axial direction following the radially outward peripheral end portion of the diaphragm spring 25. Therefore, the adjustment pinion 83 fixed to the adjustment wedge member 82 is moved axially relative to the lower rack 85 mounted on the pressure plate 24. Here, according to the first embodiment of the present invention, as is illustrated in Fig. 7A, although the upper rack 84 has been biased by the biasing member 86 in the C direction, because the adjustment pinion 83 is moved in the axial direction, the upper rack 84 is not allowed to shift in a lateral direction unless the engagement between the pinion teeth 83a and the first rack teeth 84a is thoroughly released. Therefore, within the stroke ST at which the engagement between the pinion teeth 83a and the firs track teeth 84a is not thoroughly released, although the adjustment pinion 83 is axially spaced from the lower rack 85, the upper 84 is not shifted in the axially direction because the engagement between the second rack teeth 84b of the upper rack 84 and the lower rack teeth 85a is maintained. Fig. 7B illustrates a condition immediately before the engagement between the pinion teeth 83a and the first rack teeth 84a of the upper rack 84 is thoroughly released in the course of axial movement of the adjustment wedge member 82 relative to the pressure plate 24 from the state illustrated in Fig. 7A. According to the second embodiment of the present invention, although the upper rack 84 has been biased in a direction for releasing the engagement between the upper rack 84 and the lower rack 85 while the second rack teeth 84b is slidably in contact with the lower rack teeth 85a by the biasing member 86, because the adjustment pinion 83 is moved in the axial direction, the upper rack 84 is not allowed to shift in a lateral direction unless the engagement between the pinion teeth 83a and the first rack teeth 84a is thoroughly released. Therefore, within the stroke ST at which the engagement between the pinion teeth 83a and the firs track teeth 84a is not thoroughly released, although the adjustment pinion 83 is axially spaced from the lower rack 85, the upper 84 is not shifted in the axially direction because the engagement between the second rack teeth 84b of the upper rack 84 and the lower rack teeth 85a is maintained.

Under the above condition, when the adjustment wedge member 82 is further moved away from the pressure plate 24 in response to the further variations in the posture of the diaphragm spring 25, the engagement between the pinion teeth 83a of the adjustment pinion 83 and the first rack teeth 84a of the upper rack 84 is thoroughly released. That is, while the electric current value IMADJ has been continuously supplied from the condition of the adjusting mechanism illustrated in Fig. 7B, the stroke ST can be increased sufficiently for fully releasing the engagement between the pinion teeth 83a of the adjustment pinion 83 and the first rack teeth 84a of the upper rack 84. Therefore, the engagement between the pinion teeth 83a and the first rack teeth 84a is fully released. In this case, the upper rack 84 is allowed to shift in the circumferential or lateral direction. Therefore, the upper rack 84 being biased by the biasing member 86 is shifted in the axial and lateral directions as the second rack teeth 84b is slidably moved relative to the lower rack 85a. At or about the same time, the pinion teeth 83a is separated from the first rack teeth 84a in response to the further posture variation of the diaphragm spring 25. However, the axial movement amount of the upper rack 84 relative to the lower rack 85 has been limited at a predetermined spacing by the restraining portion 84c. Therefore, once the axial movement amount of the upper rack 84 relative to the lower rack 85 reaches the predetermined spacing, the upper rack 84 is prohibited from further moving in the axial direction relative to the lower rack 85. This condition is illustrated in Fig. 7C. An amount of lateral directional movement of the upper rack 84, of which movement has been restrained by the restraining portion 84c, has been set at half a pitch in terms of a reference pitch circle of each first rack tooth 84a. Therefore, in the condition illustrated in Fig. 7C, the position of the first rack tooth 84a relative to the pinion tooth 83a is hence shifted by half a pitch. In the condition illustrated in Fig. 7C, the adjustment wedge member 82 is not rotated relative to the pressure plate 24.

Next, an operation of the engagement-releasing member 88 corresponding to the transition of the adjusting mechanism in Fig**.** 7A, 7B and 7C is described below.

When the adjustment wedge member 82 is moved further away from the pressure plate 24 in a state where the stopping portion 88d of the engagement-releasing member 88 has been in contact with the clutch cover 22, the clutch cover 22 restrains the stopping portion 88d. Therefore, the engagement-releasing member 88 rotates in the clockwise direction about the rivet 83c at the left side in Fig. 8. In such circumstances, the pushing portion 88c of the engagement-releasing member 88 pushes the end surface of the pressure plate 24 facing the diaphragm spring 25. The pressure plate 24 is then firmly moved away from the adjustment wedge member 82, as illustrated in Fig. 8C. Therefore, even when, for example, rust formation is experienced between the taper surfaces 81a and the wedge-side taper surface 82a, it is possible to firmly carry out a relative movement between the adjustment wedge member 82 and the taper portion 81.

As the predetermined period of time passes and the stroke ST reaches the judgment value (X + Y + Z), an affirmative answer "Yes" is obtained at B6 and the program proceeds to step B7 for setting the value for the adjusting operation requiring flag FADJ to "0". In here, the value for the counter N is set to "0" for updating the adjusting reference position AKI. The program then proceeds to step B10 for terminating the program illustrated in Fig. 20. Hereinafter, electric current corresponding to each vehicle driving condition is supplied to the DC motor 32 for performing an appropriate clutch control. The clutch disc 23 is then returned to the disengaged condition (the stroke ST < Y) by performing the other routine (not shown).

Next, the engagement conditions of the adjustment pinion 83, the upper rack 84, and the lower rack 85 are described in a state where the clutch disc 23 is returned to the normal disengaged condition (the stroke ST < Y).

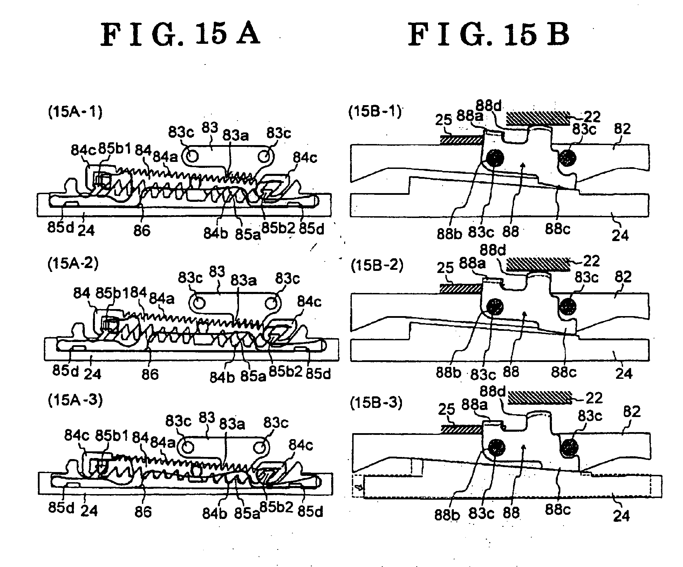

Under the above condition of the adjusting mechanism illustrated in Fig. 7(C), when the stroke ST is decreased in response to the posture variation of the diaphragm spring 25, the engagement between the pinion teeth 83a and the first rack teeth 84a commences. Here, according to the first embodiment of the present invention, the upper rack 84 in Fig. 7C has been displaced by half a pitch in the circumferential direction comparing with the one illustrated in Fig. 7B. Therefore, the tooth face of each first rack tooth 84a facing the pinion tooth 83a in Fig. 7C is shifted by one pitch relative to each first rack tooth 84a engaged with each pinion tooth 83a in Fig. 7A. Therefore, when the stroke ST is decreased by the predetermined amount Z from the condition illustrated in Fig. 7C, the first rack teeth 84a to be engaged with the pinion teeth 83a are shifted by one pitch in the right direction in Fig. 7 relative to the condition illustrated in Fig. 7A. According to the second embodiment of the present invention, the upper rack 84 in Figs. 15A-1, 15B-1 has been displaced by half a pitch in the circumferential direction. Therefore, the tooth face of each first rack tooth 84a facing the pinion tooth 83a in Figs. 15A-1, 15B-1 is shifted by one pitch relative to each first rack tooth 84a engaged with each pinion tooth 84a in Figs. 14A-2, 14B-2. Therefore, when the stroke ST is decreased by the predetermined amount Z from the condition illustrated in Figs. 14A-3, 14B-3, the first rack teeth 84a to be engaged with the pinion teeth 83a are shifted by one pitch in the right direction in Fig. 15 relative to the condition illustrated in .

In this case, according to the first and second embodiments, the adjustment wedge member 82 is pushed towards the pressure plate 24 by the pushing force of the diaphragm spring 25. Therefore, the engagement between the pinion teeth 83a and the first rack teeth 84a, and the engagement between the lower rack teeth 85a and the second rack teeth 84b are urged to be established. However, the tooth face of the first rack teeth 84a to be engaged with the pinion teeth 83a is shifted by one pitch. Therefore, both engagements therebetween are performed while the tooth faces of the first rack teeth 84a slidably contact with the pinion teeth 83a, and the tooth faces of the second rack teeth 84b slidably contact with the lower rack teeth 85a. Upon the slidable contacts of the teeth 83a, 84a, 84b, 85a, the upper rack 84 is applied with a rotational force relative to the adjustment pinion 83 and the lower rack 85 is applied with a rotational force relative to the upper rack 84. The adjustment wedge member 82 is then rotated relative to the pressure plate 24 in response to these rotational forces so that the adjusting mechanism is shifted to the condition illustrated in Fig. 7D or in Figs. 15A-3 and 15B-3, according to the first and second embodiments. The contact position between each taper surface 81a and each wedge-side taper surface 82a is hence displaced by one pitch of the first rack tooth 84a. Therefore, the axial directional spacing between the radially outward peripheral end portion of the diaphragm spring 25 and the pressure plate 24 is changed or adjusted. As described above, the posture of the diaphragm spring 25 during the normal vehicle driving is changed or modified. In this case, the stopping portion 88d of the engagement-releasing member 88 is no longer restrained by the clutch cover 22, so that a force, by which the pressure plate 24 is pushed via the pushing portion 88c, is reduced or cancelled. In the course thereof, the engagement-releasing member 88 is returned to the original or initial position.

As described above, according to the first and second embodiments of the present invention, when the abrasion amount of the clutch disc 23 becomes equal to, or greater than, a predetermined amount and the CPU 41 detects a vehicle condition in which a possibility, at which the adjusting operation is implemented erroneously, is low, it is possible to compensate, by a single adjusting operation, for the clutch abrasion, of which abrasion amount corresponds to the one pitch of the first rack teeth 84a. The abrasion amount corresponding to the one pitch is represented by a degree of height of the taper surface 81a corresponding to the one pitch. Further, when clutch abrasion is compensated, the upper rack 84 is relatively rotated in the lateral or circumferential direction by the predetermined circumferential shift amount by the biasing member 86. When the clutch is again engaged, the tooth face of the first rack teeth 84a engaged with the pinion teeth 83a of the adjustment pinion 83 is changed or shifted. In this case, a relative rotation between the adjustment wedge member 82 and the taper portion 81 is achieved in the course where the second rack teeth 84b slidably contact with the lower rack teeth 85a within a range restrained by the restraining portion 84c. Therefore, even when rust is experienced, or a degree of sliding resistance is increased, between the adjustment wedge member 82 and the taper portion 81, between the pinion teeth 83a and the first rack teeth 84a, between the lower rack teeth 85a and the second rack teeth 84b, the adjusting operation can be reliably implemented by the actuator 30, wherein it is possible to compensate for clutch abrasion with a high degree of precision.

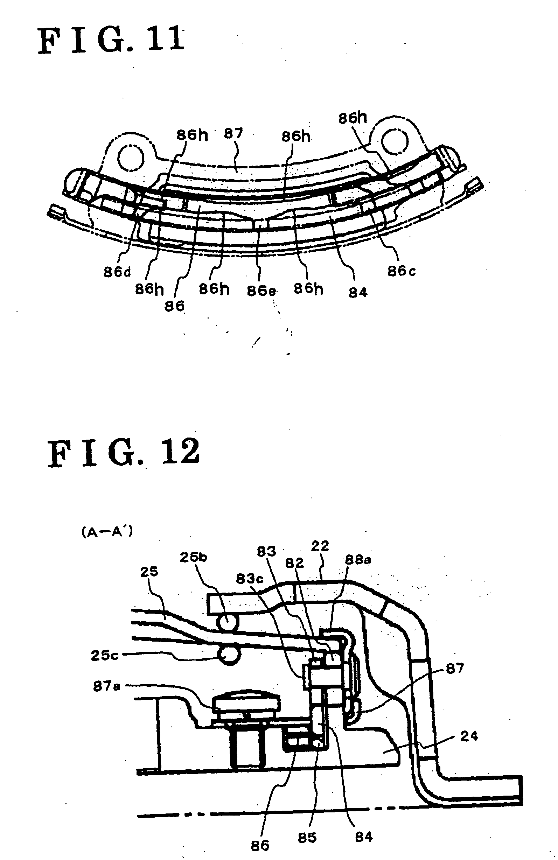

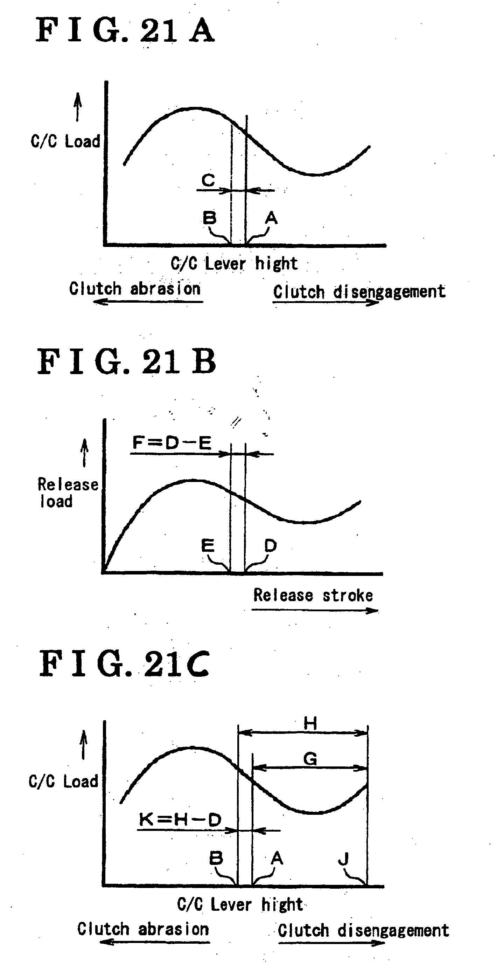

According to the first and second embodiments of the present invention described above, as illustrated in Fig. 21A, the abrasion amount X is determined as the difference (a distance C) between the adjusting reference position AKI (point A) and the fully engaging position KKI (point B). Alternatively or in addition, as illustrated in Fig. 21B, the abrasion amount X can be determined by directly detecting and calculating a variation F from an initial position D, at which the disengagement of the clutch disc 23 commences and the abrasion of the clutch disc 23is generated, to a position E, at which the abrasion has been progressed. Further, alternatively or in addition, as illustrated in Fig. 12C, the abrasion amount X can be determined by detecting a difference K between a stroke amount G and a stroke amount H The stroke amount G is a distance between a fully engaged point A in the case that there is no abrasion or immediately after the adjusting operation and a position J predetermined on a stroke of the clutch cover 22. The stroke amount H is a distance between a fully engaged point B, at which the abrasion of the clutch 20 has been progressed, and the position J.

There are various modifications being applicable within the scope of the present invention. For example, an oil pressure type actuator can be employed in substitution for the actuator 30 provided with the DC motor 32. In this case, the rod 31 can be moved in the forward and rearward directions by oil pressure controlled by an electromagnetic valve.

Further, according to the above-described embodiments of the present invention, the adjusting operation can be performed by driving the actuator 30 and by correcting the posture of the diaphragm spring 25 only when the clutch cover 22 is unlikely to resonate in response to the vehicle vibration. However, alternatively or in addition, the posture of the diaphragm spring 25 can be controlled when other predetermined conditions are satisfied.

Further, the clutch control circuit 40 according to the embodiments of the present invention is a separate unit from the actuator 30. However, the actuator 30 and the clutch control circuit 40 can be provided as a single unit.

Further, according to the embodiments of the present invention, the lower rack teeth 85a and the second rack teeth 84b are in the saw-toothed structure as a non-limiting example. However, the lower rack teeth 85a and the second rack teeth 84b can be in a structure having as small an inclined angle in the circumferential direction as the taper surfaces 81a and the wedge-side taper surfaces 82a, as far as the upper rack 84 can be moved in the circumferential direction relative to the lower rack 85 by the biasing member 86.

According to the first embodiment of the present invention, when abrasion of the friction clutch 20 is compensated by the clutch control apparatus, the upper rack 84 is rotated in the lateral or circumferential direction at a predetermined lateral shifting amount by means of the biasing member 86. When the friction clutch 20 is again engaged, the tooth surface of the first rack teeth 84b engaged with the adjustment pinion teeth 83a of the adjustment pinion 83 is changed. The adjustment wedge member 82 can hence rotate relative to the taper portion 81 of the pressure plate 24. Therefore, in the case where rust formation is experienced at each component, it is possible to reliably change or adjust an axial directional spacing between the diaphragm spring 25 and the pressure plate 24 in response to the operation of the actuator 30.

According to the second embodiment of the present invention, the upper rack 84 is provided with the first receiving portion 84d, the second receiving portion 84e, the third receiving portion 84f. The biasing member 86 is formed with the first pawl portion 86c, which applies a biasing force to the first receiving portion 84d, the second pawl portion 86d, which applies a biasing force to the second receiving portion 84e, and the third pawl portion 86e, which applies a biasing force to the third receiving portion 84f. The first pawl portion 86c and the second pawl portion 86d bias the upper rack 84 in a direction for releasing the engagement between the upper rack 84 and the lower rack 85 as well as sliding contact between the lower rack teeth 85a and the second rack teeth 84b, and the third pawl portion 86f biases the upper rack 84 in the same direction as the biasing direction of the first pawl portion 86c, or upwardly. Therefore, it is possible to move the upper rack 84 in a balanced manner and reliably.

Further, according to the second embodiment of the present invention, at least one of the adjustment pinion 83, the upper rack 84 and the lower rack 85 is surface-treated so as to reduce a degree of sliding resistance which may occur between the adjustment pinion 83 and the upper rack 84, and between the upper rack, 84 and the lower rack 85. Therefore, it is possible to reduce a degree of resistance against the biasing force required to the biasing member 86 to move the upper rack 84.

Still further, according to the second embodiment, the adjustment pinion 83 includes the groove 83b adjacent to a portion which comes in contact with the upper rack 84. The groove 83b is configured to accumulate abrasion powders generated due to abrasion of the clutch disc 23. The upper rack 84 includes the groove 84g adjacent to a portion which comes in contact with the adjustment pinion 83 and grooves 84h, 84i, and 84j adjacent to a portion which comes in contact with the lower rack 85. The groove 84g and the grooves 84h, 84i, and 84j are configured to accumulate abrasion powders generated due to abrasion of the clutch disc 23. The lower rack 85 includes a groove 85e adjacent to a portion which comes in contact with the upper rack 85. The groove 85e is configured to accumulate abrasion powders generated due to abrasion of the clutch disc 23. Therefore, it is possible to curb abrasion powders of the clutch disc 23 from being accumulated at the engagement portions therebetween. As a result, it is possible to reduce a degree of sliding resistance which may occur between the upper rack 84 and the lower rack 85, and to reduce a load required to the biasing member 86 to move the upper rack 84.

Still further, according to the second embodiment of the present invention, a main body of the biasing member 86 includes the notch 86h adjacent to the upper rack 84 and the pressure plate 24. Therefore, it is possible to avoid or attenuate sliding resistance which may occur due to interferences between the upper rack 84 and the pressure plate 24, and to reduce resistance against the biasing force required to the biasing member 86 to move the upper rack 84.

## Claims

1. A clutch control apparatus comprising: a clutch assembly including a flywheel (21) integrally rotatable with an output shaft (10a) of a driving power source (10); a pressure plate (24); a clutch disc (23) frictionally engageable between a pressure plate (24) and the flywheel (21) so as to transmit a driving power of the driving power source (10) to a transmission (11); a diaphragm spring (25) configured to change the frictional engagement of the clutch disc (23) when a posture the diaphragm spring (25) varies; a clutch cover (22); and an adjusting mechanism (80) intervening between the pressure plate (24) and the diaphragm spring (25), the adjusting mechanism (80) configured to establish a transmitting path of an operation force between the pressure plate (24) and the diaphragm spring (25) and to alter an axial directional spacing between the diaphragm spring (25) and the pressure plate (24), and the adjusting mechanism (80) comprising:
a taper portion (81) associated with the pressure plate (24) and having a taper surface (81 a) facing the diaphragm spring (25);
a lower rack (85) fixed at the taper portion (81) and having lower rack teeth (85a) facing the diaphragm spring (25) side;
an adjustment wedge member (82) relatively rotationally interposed between the taper portion (81) and the diaphragm spring (25) and having an wedge-side taper surface (82a) operatively contacted with the taper surface (81a);
an adjustment pinion (83) attached to the adjustment wedge member (82) and having pinion teeth (83a) facing the pressure plate (24) side;
an upper rack (84) interposed between the adjustment pinion (83) and the lower rack (85) so as to rotate relative to the adjustment pinion (83) and the adjustment wedge member (82), the upper rack (84) having first rack teeth (84a) engageable with the pinion teeth (83a) and second rack teeth (84b) engageable with the lower rack teeth (85a); and
a biasing member (86) for biasing the upper rack (84) in a direction for releasing an engagement between the upper rack (84) and the lower rack (85) as well as generating sliding contact between the lower rack teeth (85a) and the second rack teeth (84b) of the upper rack (84), the adjusting mechanism (80) **characterized in** further comprising:
an engagement-releasing member (88) freely rotatably attached to the adjustment wedge member (82), the engagement-releasing member (88) having a stopping portion (88d) that restrains an axial directional approach of the pressure plate (24) to the clutch cover (22) in response to a contact of the stopping portion (88d) with the clutch cover (22), a holding portion (88a) that holds a radially outward peripheral end portion of the diaphragm spring (25), and a pushing portion (88c) operatively pushing the pressure plate (24) in response to rotation of the engagement-releasing member (88),
wherein, the engagement-releasing member (88) is configured so that, when the pushing portion (88c) pushes the pressure plate (24) in response to the contact of the stopping portion (88d) with the clutch cover (22) and in response to an axial movement of the holding portion (88a) holding the radially outward peripheral end portion of the diaphragm spring, (25), the adjustment wedge member (82) is moved away from the pressure plate (24), and the engagement between the adjustment pinion (83) and the upper rack (84) is released.

2. A clutch control apparatus according to claim 1, further comprising:
an actuator (30) axially moving the clutch disc (23) facing the flywheel (21) via the diaphragm spring (25) and the pressure plate (24);
an operation fulcrum (22c) formed at the clutch cover (22) fixed to the flywheel (21), the operation fulcrum (22c) being associated with the diaphragm spring (25), of which posture varies in response to changes in an engagement condition of the clutch disc (23); and
a controller (40) controlling operation of the actuator (30),
wherein, when a predetermined condition is not satisfied, the controller (40) controls the operation of the actuator (30) so as to apply an operation force to the diaphragm spring (25) within a range at which the axial directional movement of the pressure plate (24) is not restrained by the stopping portion (88d) and so as to axially move the pressure plate (24) at a condition in which an engagement between the pinion teeth (83a) and the first rack teeth (84a) has been established and an engagement between the second rack teeth (84b) and the lower rack teeth (85a) has been established, and when the predetermined condition is satisfied, the controller (40) controls, even after contact of the stopping portion (88d) with the clutch cover (22), the operation of the actuator (30) so as to axially move the holding portion (88a) holding the radially outward peripheral end portion of the diaphragm spring (25) and so as to push the pressure plate (24) by the pushing portion (88c), so that the adjustment wedge member (82) is moved relative to the pressure plate (24) no less than an axial directional shifting amount which is needed for thoroughly releasing the engagement between the pinion teeth (83a) and the first rack teeth (84a), and tooth faces of the first rack teeth (84a) to be engaged with the pinion teeth (83a) are shifted, after which the clutch disc (23) is returned to an engagement condition by the actuator (30).

3. A clutch control apparatus according to claim 1 or 2, wherein the upper rack (84) is provided with a restraining portion (84c) by which axial and lateral directional shifting amounts of the upper rack (84) relative to the lower rack (85) are restrained prior to thorough release of the engagement between the lower rack teeth (85a) and the second rack teeth (84b).

4. A clutch control apparatus according to claim 3, wherein the lateral directional shifting amount of the upper rack (84) relative to the lower rack (85), the amount which is restrained by the restraining portion (84c), is set between half a pitch, and one pitch, of a reference pitch circle of the each first rack tooth (84a), and wherein the pinion teeth (83a) engaged with the first rack teeth (84a) after the predetermined condition is satisfied is shifted, relative to the pinion teeth (83a) engaged with the first rack teeth (84a) before the predetermined condition is satisfied, by one pitch in a direction for increasing the axial spacing between the diaphragm spring (25) and the pressure plate (24).

5. A clutch control apparatus according to claim 3 or 4, wherein the controller (40) controls the operation of the actuator (30) so as to move the adjustment wedge member (82) relative to the pressure plate (24) not less than a movement-amount which corresponds to a sum of the axial directional shifting amount of the upper rack (84) restrained by the restraining portion (84c) and the axial directional shifting amount required for thoroughly releasing the engagement between the pinion teeth (83a) and the first rack teeth (84a).

6. A clutch control apparatus according to claim 1, wherein the upper rack (84) includes a first receiving portion (84d) at one end of the upper rack (84), a second receiving portion (84e) at an other end of the upper rack (84), a third receiving portion (84f) in the vicinity of a central portion of the upper rack (84), and the biasing member (86) includes a first pawl portion (86c) at a position corresponding to the first receiving portion (84d), a second pawl portion (86d) at a position corresponding to the second receiving portion (84e), and a third pawl portion (86e) at a position corresponding to the third receiving portion (84f), and wherein the first receiving portion (84d) is applied with a biasing force of the first pawl portion (86c), the second receiving portion (84e) is applied with a biasing force of the second pawl portion (86d), and the third receiving portion (84f) is applied with a biasing force of the third pawl portion (86e).

7. A clutch control apparatus according to claim 6, wherein the first pawl portion (86c) and the second pawl portion (86d) bias the upper rack (84) in a direction for releasing the engagement between the upper rack (84) and the tower rack (85) as well as sliding contact between the lower rack teeth (85a) and the second rack teeth (84b), and the third pawl portion (86f) biases the upper rack (84) in the same direction as the biasing direction of the first pawl portion (86c), or upwardly.

8. A clutch control apparatus according to claim 6 or 7, wherein at least one of the adjustment pinion (83), the upper rack (84) and the lower rack (85) is surface-treated so as to reduce a degree of sliding resistance.

9. A clutch control apparatus according to claim any one of claims 6, 7 and 8, the adjustment pinion (83) includes a groove (83b) adjacent to a portion which comes in contact with the upper rack (84), the groove (83b) configured to accumulate abrasion powders generated due to abrasion of the clutch disc (23), the upper rack (84) includes a groove (84g) adjacent to a portion which comes in contact with the adjustment pinion (83) and a groove (84h, 84i, 84j) adjacent to a portion which comes in contact with the lower rack (85), the groove (84g) and the groove (84h, 84i, 84j) configured to accumulate abrasion powders generated due to abrasion of the clutch disc (23), and the lower rack (85) includes a groove (85e) adjacent to a portion which comes in contact with the upper rack (85), the groove (85e) configured to accumulate abrasion powders generated due to abrasion of the clutch disc (23).

10. A clutch control apparatus according to claim any one of claims 6 to 9, wherein a main body of the biasing member (86) includes a notch (86h) adjacent to the upper rack (84) and the pressure plate (24).

## Patentansprüche

1. Kupplungssteuerungsvorrichtung, enthaltend: eine Kupplungsanordnung, die ein Schwungrad (21) beinhaltet, das integral mit einer Abtriebswelle (10a) einer Antriebskraftquelle (10) drehbar ist; eine Druckplatte (24); eine Kupplungsscheibe (23), die zwischen einer Druckplatte (24) und dem Schwungrad (21) zum Übertragen einer Antriebskraft von der Antriebskraftquelle (10) zu einem Getriebe (11) in Reibeingriff bringbar ist; eine Membranfeder (25), die zum Ändern des Reibeingriffs der Kupplungsscheibe (23) gestaltet ist, wenn die Position der Membranfeder (25) variiert; eine Kupplungsabdeckung (22); und einen Einstellmechanismus (80), der zwischen der Druckplatte (24) und der Membranfeder (25) auftritt, wobei der Einstellmechanismus (80) zum Herstellen eines Übertragungswegs einer Betriebskraft zwischen der Druckplatte (24) und der Membranfeder (25) und zum Abändern eines Zwischenraums in Axialrichtung zwischen der Membranfeder (25) und der Druckplatte (24) gestaltet ist, und wobei der Einstellmechanismus (80) enthält:
einen Kegelbereich (81), der der Druckplatte (24) zugeordnet ist und eine Kegelfläche (81 a), die auf die Membranfeder (25) gerichtet ist, aufweist;
eine untere Zahnstange (85), die an dem Kegelbereich (81) befestigt ist und untere Zahnstangenzähne (85a), die auf die Seite der Membranfeder (25) gerichtet sind, aufweist;
ein Einstellkeilelement (82), das relativ drehend zwischen dem Kegelbereich (81) und der Membranfeder (25) angeordnet ist und eine Keilseitenkegelfläche (82a), die die Kegelfläche (81 a) wirkend berührt, aufweist;
ein Einstellzahnrad (83), das an dem Einstellkeilelement (82) angebracht ist und Zahnradzähne (83a), die auf die Seite der Druckplatte (24) gerichtet sind, aufweist;
eine obere Zahnstange (84), die zwischen dem Einstellzahnrad (83) und der unteren Zahnstange (85) zum Drehen relativ zu dem Einstellzahnrad (83) und dem Einstellkeilelement (82) angeordnet ist, wobei die obere Zahnstange (84) erste Zahnstangenzähne (84a), die mit den Zahnradzähnen (83a) in Eingriff bringbar sind, und zweite Zahnstangenzähne (84b), die mit den unteren Zahnstangenzähnen (85a) in Eingriff bringbar sind, aufweist; und
ein Vorspannelement (86) zum Vorspannen der oberen Zahnstange (84) in einer Richtung zum Lösen eines Eingriffs zwischen der oberen Zahnstange (84) und der unteren Zahnstange (85) sowie zum Erzeugen eines Gleitkontakts zwischen den unteren Zahnstangenzähnen (85a) und den zweiten Zahnstangenzähnen (84b) der oberen Zahnstange (84), wobei der Einstellmechanismus (80) **dadurch gekennzeichnet ist, dass** er weiter enthält:
ein Eingriffs-Löseelement (88), das frei drehbar an dem Einstellkeilelement (82) angebracht ist, wobei das Eingriffs-Löseelement (88) einen Anschlagbereich (88d), der eine Annäherung der Druckplatte (24) an die Kupplungsabdeckung (22) in Axialrichtung in Abhängigkeit von einer Berührung des Anschlagbereichs (88d) mit der Kupplungsabdeckung (22) verhindert, einen Haltebereich (88a), der einen radial äußeren Umfangsendbereich der Membranfeder (25) hält, und einen Drückbereich (88c), der die Druckplatte (24) in Abhängigkeit von der Drehung des Eingriffs-Löseelements (88) wirkend drückt, aufweist,
wobei das Eingriffs-Löseelement (88) so gestaltet ist, dass, wenn der Drückbereich (88c) die Druckplatte (24) in Abhängigkeit von der Berührung des Anschlagbereichs (88d) mit der Kupplungsabdeckung (22) und in Abhängigkeit von einer axialen Bewegung des Haltebereichs (88a), der den radial äußeren Umfangsendbereich der Membranfeder (25) hält, drückt, das Einstellkeilelement (82) von der Druckplatte (24) weg bewegt wird, und der Eingriff zwischen dem Einstellzahnrad (83) und der oberen Zahnstange (84) gelöst wird.

2. Kupplungssteuerungsvorrichtung nach Anspruch 1, weiter enthaltend:
einen Aktuator (30), der die Kupplungsscheibe (23), die auf das Schwungrad (21) gerichtet ist, über die Membranfeder (25) und die Druckplatte (24) axial bewegt;
einen Antriebsdrehpunkt (22c), der an der Kupplungsabdeckung (22), die an dem Schwungrad (21) befestigt ist, geformt ist, wobei der Antriebsdrehpunkt (22c) der Membranfeder (25), deren Position in Abhängigkeit von Änderungen in einer Eingriffslage der Kupplungsscheibe (23) variiert, zugeordnet ist; und
einen Regler (40), der die Betätigung des Aktuators (30) regelt,
wobei, wenn eine vorherbestimmte Bedingung nicht erfüllt ist, der Regler (40) die Betätigung des Aktuators (30) zum Aufbringen einer Antriebskraft auf die Membranfeder (25) innerhalb eines Bereichs, in dem die Bewegung der Druckplatte (24) in Axialrichtung nicht durch den Anschlagbereich (88d) verhindert wird, und zum Bewegen der Druckplatte (24) in axialer Richtung unter einem Zustand, in dem ein Eingriff zwischen den Zahnradzähnen (83a) und den ersten Zahnstangenzähnen (84a) hergestellt worden ist und ein Eingriff zwischen den zweiten Zahnstangenzähnen (84b) und den unteren Zahnstangenzähnen (85a) hergestellt worden ist, regelt, und wenn die vorherbestimmte Bedingung erfüllt ist, der Regler (40), sogar nach der Berührung des Anschlagbereichs (88d) mit der Kupplungsabdeckung (22), die Betätigung des Aktuators (30) regelt, so dass der Haltebereich (88a), der den radial äußeren Umfangsendbereich der Membranfeder (25) hält, in axialer Richtung bewegt wird und so dass die Druckplatte (24) durch den Drückbereich (88c) gedrückt wird, so dass das Einstellkeilelement (82) relativ zu der Druckplatte (24) bewegt wird, nicht weniger als einen Verschiebungsweg in Axialrichtung, der für sorgfältiges Lösen des Eingriffs zwischen den Zahnradzähnen (83a) und den ersten Zahnstangenzähnen (84a) benötigt wird, und die Zahnköpfe der ersten Zahnstangenzähne (84a), die mit den Zahnradzähnen (83a) in Eingriff zu bringen sind, verschoben werden, wonach die Kupplungsscheibe (23) zu einer Eingriffslage durch den Aktuator (30) zurückbewegt wird.

3. Kupplungssteuerungsvorrichtung nach Anspruch 1 oder 2, wobei die obere Zahnstange (84) mit einem Rückhaltebereich (84c) versehen ist, durch den die Verschiebungswege der oberen Zahnstange (84) in Axialrichtung und lateraler Richtung relativ zu der unteren Zahnstange (85) vor dem sorgfältigen Lösen des Eingriffs zwischen den unteren Zahnstangenzähnen (85a) und den zweiten Zahnstangenzähnen (84b) begrenzt werden.

4. Kupplungssteuerungsvorrichtung nach Anspruch 3, wobei der Verschiebungsweg der oberen Zahnstange (84) in lateraler Richtung relativ zu der unteren Zahnstange (85), der Betrag, der durch den Rückhaltebereich (84c) begrenzt wird, zwischen einem halben Abstand und einem Abstand eines Referenzabstandskreises des jeweiligen ersten Zahnstangenzahns (84a) festgesetzt wird, und wobei die Zahnradzähne (83a), die mit den ersten Zahnstangenzähne (84a) in Eingriff stehen, nachdem die vorherbestimmte Bedingung erfüllt ist, relativ zu den Zahnradzähnen (83a), die mit den ersten Zahnstangenzähnen (84a) in Eingriff stehen, bevor die vorherbestimmte Bedingung erfüllt ist, durch einen Abstand in einer Richtung zum Erhöhen des axialen Zwischenraums zwischen der Membranfeder (25) und der Druckplatte (24) verschoben werden.

5. Kupplungssteuerungsvorrichtung nach Anspruch 3 oder 4, wobei der Regler (40) die Betätigung des Aktuators (30) regelt, so dass das Einstellkeilelement (82) relativ zu der Druckplatte (24) bewegt wird, nicht weniger als ein Bewegungsbetrag, der einer Summe des Verschiebungswegs der oberen Zahnstange (84), die durch den Rückhaltebereich (84c) zurückgehalten wird, in Axialrichtung und des Verschiebungswegs in Axialrichtung, der zum sorgfältigen Lösen des Eingriffs zwischen den Zahnradzähnen (83a) und den ersten Zahnstangenzähnen (84a) gefordert ist, entspricht.

6. Kupplungssteuerungsvorrichtung nach Anspruch 1, wobei die obere Zahnstange (84) einen ersten Aufnahmebereich (84d) an einem Ende der oberen Zahnstange (84), einen zweiten Aufnahmebereich (84e) an einem anderen Ende der oberen Zahnstange (84), einen dritten Aufnahmebereich (84f) in der Nähe eines Zentralbereichs der oberen Zahnstange (84) enthält, und das Vorspannelement (86) einen ersten Klauenbereich (86c) an einer Position, die dem ersten Aufnahmebereich (84d) entspricht, einen zweiten Klauenbereich (86d) an einer Position, die dem zweiten Aufnahmebereich (84e) entspricht, und einen dritten Klauenbereich (86e) an einer Position, die dem dritten Aufnahmebereich (84f) entspricht, enthält, und wobei der erste Aufnahmebereich (84d) mit einer Vorspannkraft des ersten Klauenbereichs (86c) beaufschlagt wird, der zweite Aufnahmebereich (84e) mit einer Vorspannkraft des zweiten Klauenbereichs (86d) beaufschlagt wird, und der dritte Aufnahmebereich (84f) mit einer Vorspannkraft des dritten Klauenbereichs (86e) beaufschlagt wird.

7. Kupplungssteuerungsvorrichtung nach Anspruch 6, wobei der erste Klauenbereich (86c) und der zweite Klauenbereich (86d) die obere Zahnstange (84) in einer Richtung zum Lösen des Eingriffs zwischen der oberen Zahnstange (84) und der unteren Zahnstange (85) als auch des Gleitkontakts zwischen den unteren Zahnstangenzähnen (85a) und den zweiten Zahnstangenzähnen (84b) vorspannen, und der dritte Klauenbereich (86f) die obere Zahnstange (84) in derselben Richtung wie die Vorspannrichtung des ersten Klauenbereichs (86c) oder aufwärts vorspannt.

8. Kupplungssteuerungsvorrichtung nach Anspruch 6 oder 7, wobei zumindest eines der Einstellzahnräder (83), der oberen Zahnstange (84) und der unteren Zahnstange (85) zum Reduzieren des Ausmaßes des Gleitwiderstands oberflächenbehandelt ist.

9. Kupplungssteuerungsvorrichtung nach einem der Ansprüche 6, 7 und 8, wobei das Einstellzahnrad (83) eine Nut (83b) neben einem Bereich, der mit der oberen Zahnstange (84) in Berührung kommt, beinhaltet, wobei die Nut (83b) zum Ansammeln von Abriebpulver, das infolge des Abriebs der Kupplungsscheibe (23) erzeugt wird, gestaltet ist, die obere Zahnstange (84) eine Nut (84g) neben einem Bereich, der mit dem Einstellzahnrad (83) in Berührung kommt, und eine Nut (84h, 84i, 84j) neben einem Bereich, der mit der unteren Zahnstange (85) in Berührung kommt, beinhaltet, wobei die Nut (84g) und die Nut (84h, 84i, 84j) zum Ansammeln von Abriebpulver, das infolge des Abriebs der Kupplungsscheibe (23) erzeugt wird, gestaltet sind, und wobei die untere Zahnstange (85) eine Nut (85e) neben einem Bereich, der mit der oberen Zahnstange (85) in Berührung kommt, beinhaltet, wobei die Nut (85e) zum Ansammeln von Abriebpulver, das infolge des Abriebs der Kupplungsscheibe (23) erzeugt wird, gestaltet ist.

10. Kupplungssteuerungsvorrichtung nach einem der Ansprüche 6 bis 9, wobei ein Hauptkörper des Vorspannelements (86) eine Einkerbung (86h) neben der oberen Zahnstange (84) und der Druckplatte (24) enthält.

## Revendications

1. Dispositif de contrôle d'embrayage, comprenant : un ensemble d'embrayage comprenant un volant (21) pouvant tourner en un seul bloc avec un arbre de sortie (10a) d'une source de puissance d'entraînement (10) ; une plaque de pression (24) ; un disque d'embrayage (23) pouvant venir en prise avec frottement entre une plaque de pression (24) et le volant (21) de manière à transmettre une puissance d'entraînement de la source de puissance d'entraînement (10) à une transmission (11) ; un ressort à diaphragme (25) configuré pour changer la mise en prise à frottement du disque d'embrayage (23) lorsque la posture du ressort à diaphragme (25) varie ; un couvercle d'embrayage (22) ; et un mécanisme d'ajustement (80) intervenant entre la plaque de pression (24) et le ressort à diaphragme (25), le mécanisme d'ajustement (80) étant configuré pour établir un trajet de transmission d'une force d'actionnement entre la plaque de pression (24) et le ressort à diaphragme (25), et pour modifier un espacement de direction axiale entre le ressort à diaphragme (25) et la plaque de pression (24), et le mécanisme d'ajustement (80) comprenant :
une partie effilée (81) associée à la plaque de pression (24), et ayant une surface effilée (81a) faisant face au ressort à diaphragme (25) ;
une crémaillère inférieure (85) fixée au niveau de la partie effilée (81), et ayant des dents de crémaillère inférieure (85a) faisant face au côté du ressort à diaphragme (25) ;
un élément formant cale d'ajustement (82) interposé de manière relativement rotative entre la partie effilée (81) et le ressort à diaphragme (25), et ayant une surface effilée côté cale (82a) mise en contact de manière opérationnelle avec la surface effilée (81a) ;
un pignon d'ajustement (83) fixé sur l'élément formant cale d'ajustement (82), et ayant des dents de pignon (83a) faisant face au côté de plaque de pression (24) ;
une crémaillère supérieure (84) interposée entre le pignon d'ajustement (83) et la crémaillère inférieure (85) de manière à tourner par rapport au pignon d'ajustement (83) et l'élément formant cale d'ajustement (82), la crémaillère supérieure (84) ayant des premières dents de crémaillère (84a) pouvant venir en prise avec les dents de pignon (83a), et des secondes dents de crémaillère (84b) pouvant venir en prise avec les dents de crémaillère inférieure (85a) ; et
un élément de rappel (86) pour rappeler la crémaillère supérieure (84) dans une direction pour libérer une mise en prise entre la crémaillère supérieure (84) et la crémaillère inférieure (85), de même que pour générer un contact coulissant entre les dents de crémaillère inférieure (85a) et les secondes dents de crémaillère (84b) de la crémaillère supérieure (84), le mécanisme d'ajustement (80) étant **caractérisé en ce qu'**il comporte en outre :
un élément de libération de mise en prise (88) fixé pouvant tourner librement sur l'élément formant cale d'ajustement (82), l'élément de libération de mise en prise (88) ayant une partie d'arrêt (88d) qui retient une approche de direction axiale de la plaque de pression (24) par rapport au couvercle d'embrayage (22) en réponse à un contact de la partie d'arrêt (88d) avec le couvercle d'embrayage (22), une partie de maintien (88a) qui maintient une partie d'extrémité périphérique radialement vers l'extérieur du ressort à diaphragme (25), et une partie de poussée (88c) poussant de manière opérationnelle la plaque de pression (24) en réponse à une rotation de l'élément de libération de mise en prise (88),
dans lequel l'élément de libération de mise en prise (88) est configuré de telle sorte que lorsque la partie de poussée (88c) pousse la plaque de pression (24) en réponse au contact de la partie d'arrêt (88d) avec le couvercle d'embrayage (22), et en réponse à un déplacement axial de la partie de maintien (88a) maintenant la partie d'extrémité périphérique radialement extérieure du ressort à diaphragme (25), l'élément formant cale d'ajustement (82) est déplacé loin de la plaque de pression (24), et la mise en prise entre le pignon d'ajustement (83) et la crémaillère supérieure (84) est libérée.

2. Dispositif de contrôle d'embrayage selon la revendication 1, comportant en outre :
un actionneur (30) déplaçant axialement le disque d'embrayage (23) faisant face au volant (21) via le ressort à diaphragme (25) et la plaque de pression (24) ;
un point d'appui d'actionnement (22c) formé au niveau du couvercle d'embrayage (22) fixé sur le volant (21), le point d'appui d'actionnement (22c) étant associé au ressort à diaphragme (25), dont la posture varie en réponse à des changements d'état de mise en prise du disque d'embrayage (23), et
une commande (40) commandant le fonctionnement de l'actionneur (30),
dans lequel, lorsqu'une condition prédéterminée n'est pas satisfaite, la commande (40) commande le fonctionnement de l'actionneur (30) de manière à appliquer une force d'actionnement au ressort à diaphragme (25) dans une plage dans laquelle le déplacement dans une direction axiale de la plaque de pression (24) n'est pas limité par la partie d'arrêt (88d), et de manière à déplacer axialement la plaque de pression (24) dans une condition dans laquelle une mise en prise entre les dents de pignon (83a) et les premières dents de crémaillère (84a) a été établie, et une mise en prise entre les secondes dents de crémaillère (84b) et les dents de crémaillère inférieure (85a) a été établie, et lorsque la condition prédéterminée est satisfaite, la commande (40) commande, même après un contact de la partie d'arrêt (88d) avec le couvercle d'embrayage (22), l'actionnement de l'actionneur (30) de manière à déplacer axialement la partie de maintien (88a) supportant la partie d'extrémité périphérique radialement vers l'extérieur du ressort à diaphragme (25), et de manière à pousser la plaque de pression (24) par l'intermédiaire de la partie de poussée (88c), de sorte que l'élément formant cale d'ajustement (82) est déplacé par rapport à la plaque de pression (24) pas moins qu'une quantité de décalage dans une direction axiale qui est nécessaire pour libérer complètement la mise en prise entre les dents de pignon (83a) et les premières dents de crémaillère (84a), et les faces de dent des premières dents de crémaillère (84a) devant être mises en prise avec les dents de pignon (83a) sont décalées, après quoi le disque d'embrayage (23) est ramené vers un état en prise par l'actionneur (30).

3. Dispositif de contrôle d'embrayage selon la revendication 1 ou 2, dans lequel la crémaillère supérieure (84) est munie d'une partie de limitation (84c) par l'intermédiaire de laquelle des quantités de décalage dans une direction axiale et latérale de la crémaillère supérieure (84) par rapport à la crémaillère inférieure (85) sont limitées avant libération complète de la mise en prise entre les dents de crémaillère inférieure (85a) et les secondes dents de crémaillère (84b).

4. Dispositif de contrôle d'embrayage selon la revendication 3, dans lequel la quantité de décalage dans une direction latérale de la crémaillère supérieure (84) par rapport à la crémaillère inférieure (85), la quantité qui est limitée par la partie de limitation (84c), est établie à la moitié d'un pas, et un pas, d'un cercle de pas de référence de chaque première dent de crémaillère (84a), et dans lequel les dents de pignon (83a) en prise avec les premières dents de crémaillère (84a) après que la condition prédéterminée ait été satisfaite, sont décalées, par rapport aux dents de pignon (83a) mises en prise avec les dents de première crémaillère (84a) avant que la condition prédéterminée ne soit satisfaite, d'un pas dans une direction pour augmenter l'espacement axial entre le ressort à diaphragme (25) et la plaque de pression (24).

5. Dispositif de contrôle d'embrayage selon la revendication 3 ou 4, dans lequel la commande (40) commande le fonctionnement de l'actionneur (30) de manière à déplacer l'élément formant cale d'ajustement (82) par rapport à la plaque de pression (24) pas moins qu'une quantité de déplacement qui correspond à une somme de la quantité de décalage dans la direction axiale de la crémaillère supérieure (84) limitée par la partie de limitation (84c), et la quantité de décalage dans la direction axiale nécessaire pour libérer complètement la mise en prise entre les dents de pignon (83a) et les dents de première crémaillère (84a).

6. Dispositif de contrôle d'embrayage selon la revendication 1, dans lequel la crémaillère supérieure (84) comprend une première partie de réception (84d) à une première extrémité de la crémaillère supérieure (84), une deuxième partie de réception (84e) à l'autre extrémité de la crémaillère supérieure (84), une troisième partie de réception (84f) à proximité d'une partie centrale de la crémaillère supérieure (84), et l'élément de rappel (86) comprend une première partie de cliquet (86c) dans une position correspondant à la première partie de réception (84d), une deuxième partie de cliquet (86d) dans une position correspondant à la deuxième partie de réception (84e), et une troisième partie de cliquet (86e) dans une position correspondant à la troisième partie de réception (84f), et dans lequel la première partie de réception (84d) se voit appliqué une force de rappel de la première partie de cliquet (86d), la deuxième partie de réception (84e) se voit appliquer une force de rappel de la deuxième partie de cliquet (86d), et la troisième partie de réception (84f) se voit appliquer une force de rappel de la troisième partie de cliquet (86d).

7. Dispositif de contrôle d'embrayage selon la revendication 6, dans lequel la première partie de cliquet (86c) et la deuxième partie de cliquet (86d) rappellent la crémaillère supérieure (84) dans une direction pour libérer la mise en prise entre la crémaillère supérieure (84) et la crémaillère inférieure (85), de même qu'un contact coulissant entre les dents de crémaillère inférieure (85a) et les secondes dents de crémaillère (84b), et la troisième partie de cliquet (86f) rappelle la crémaillère supérieure (84) dans la même direction que la direction de rappel de la première partie de cliquet (86c), ou vers le haut.

8. Dispositif de contrôle d'embrayage selon la revendication 6 ou 7, dans lequel au moins un élément parmi le pignon d'ajustement (83), la crémaillère supérieure (84) et la crémaillère inférieure (85) est traité en surface de manière à réduire un degré de résistance au coulissement.

9. Dispositif de contrôle d'embrayage selon l'une quelconque des revendications 6, 7 et 8, dans lequel le pignon d'ajustement (83) comprend une rainure (83b) adjacente à une partie qui vient en contact avec la crémaillère supérieure (84), la rainure (83b) étant configurée pour accumuler des poudres d'abrasion générées du fait d'une abrasion du disque d'embrayage (23), la crémaillère supérieure (84) comprend une rainure (84g) adjacente à une partie qui vient en contact avec le pignon d'ajustement (83), et une rainure (84h, 84i, 84j) adjacente à une partie qui vient en contact avec la crémaillère inférieure (85), la rainure (84g) et la rainure (84h, 84i, 84j) étant configurées pour accumuler des poudres d'abrasion générées du fait d'une abrasion du disque d'embrayage (23), et la crémaillère inférieure (85) comprend une rainure (85e) adjacente à une partie qui vient en contact avec la crémaillère supérieure (85), la rainure (85e) étant configurée pour accumuler des poudres d'abrasion générées du fait d'une abrasion du disque d'embrayage (23).

10. Dispositif de contrôle d'embrayage selon l'une quelconque des revendications 6 à 9, dans lequel un corps principal de l'élément de rappel (86) comprend une encoche (86h) adjacente à la crémaillère supérieure (84) et à la plaque de pression (24).
